# FASCICULE DE BREVET EUROPEEN

(11) **EP 1 340 104 B1**
(45) Date de publication et mention de la délivrance du brevet: **25.05.2005**
(21) Numéro de dépôt: 01999836.8
(22) Date de dépôt: 05.12.2001
(51) Int. Cl.: G01V 8/10, G08B 21/00, G06T 7/20

(54) **PROCEDE ET DISPOSITIF POUR DETECTER UN CORPS A PROXIMITE D'UNE INTERFACE DE TYPE EAU/AIR**
VERFAHREN UND VORRICHTUNG ZUR DETEKTION EINES KÖRPERS IN DER NÄHE EINER WASSER/LUFT SCHICHTGRENZE
METHOD AND DEVICE FOR DETECTING AN OBJECT NEAR A WATER/AIR INTERFACE

(30) Priorité: 06.12.2000 FR 0015803; 06.12.2000 FR 0015805
(43) Date de publication de la demande: 03.09.2003
(73) Titulaire: Poseidon, 92100 Boulogne Billancourt (FR)
(72) Inventeur: MENIERE, Jérôme, F-75017 PARIS (FR); LEFEBURE, Martin, F-92400 COURBEVOIE (FR); GUICHARD, Frédéric, F-75012 PARIS (FR); MIGLIORINI, Christophe, F-92800 PUTEAUX (FR)
(74) Mandataire: Grynwald, Albert
(86) Numéro de dépôt international: PCT/FR2001/003842
(87) Numéro de publication internationale: WO 2002/046796

(56) Documents cités:
- FR-A- 2 763 459
- US-A- 4 779 095
- US-A- 5 880 771
- PATENT ABSTRACTS OF JAPAN vol. 2000, no. 08, 6 octobre 2000 (2000-10-06) & JP 2000 148991 A (NEC CORP), 30 mai 2000 (2000-05-30)

## Description

La présente invention concerne un procédé et un système pour détecter un corps dans une zone située à proximité d'une interface entre deux milieux liquides et/ou gazeux ayant des indices de réfraction différents, notamment du type eau/air. Au sens de la présente invention "à proximité" désigne également "à l'interface".

Le problème concerne la détection de présence de corps dans le voisinage d'une interface de type eau/air. En plus de ce problème principal, viennent s'ajouter la discrimination entre les corps situés d'un côté ou de l'autre de l'interface et la détection de corps stationnaires.

L'invention s'attachera à résoudre ces différents problèmes dans le cas, entre autre, de quatre applications plus particulières.

Première application : surveillance des piscines. Dans le cas de cette application, l'invention a pour objet de déclencher une alarme si un corps stationnaire est situé sous l'interface formée par la surface de l'eau de la piscine. Plus particulièrement, dans le cas de cette application, l'invention a pour objet de déclencher une alarme dans le cas où le corps d'un nageur est resté immergé dans l'eau pendant un temps jugé trop long.

Deuxième application : estimation statistique du temps d'occupation d'une zone surveillée. Cette application permet d'effectuer des analyses statistiques sur notamment l'occupation d'une piscine.

Troisième application : estimation de trajectoire des corps. Cette application permet de donner à un nageur sportif ou amateur,. ou à son entraîneur, des informations quant à ses performances lors d'un entraînement ou d'une compétition dans une piscine.

Quatrième application : mise en évidence de la disparition d'un corps de la zone surveillée. Cette application peut être exploitée notamment dans le cas de la surveillance des nageurs en bord de mer ou dans des bassins ludiques tels que des piscines à vagues par exemple.

Il existe différentes méthodes de détection de présence de corps dans une certaine zone. Elles utilisent en général plusieurs capteurs vidéo installés sous le niveau de l'interface. Bien qu'efficace ces techniques ne sont pas toujours commodes à mettre en oeuvre. Elles peuvent également soulever des problèmes de maintenance, notamment dans des piscines ne comportant pas de galeries techniques.

De telles techniques ont été décrites dans le brevet JP 2000 148991, déposé au nom de NEC Corp, ou dans le brevet US A 5880771, déposé au nom de Sutton Philip, ou encore par le déposant dans des demandes de brevet ou des brevets antérieurs tels que le brevet FR 96 10442, déposé le 26 août 1996 ou dans la demande française n° 99 16124 déposée le 21 décembre 1999 pour "Procédé et système pour détecter un objet devant un fond", demande publiée le 22 juin 2001 sous le numéro FR2802653. Certains des éléments techniques décrits en détail dans ces brevets ou demandes de brevet ont été repris en s'en tenant à l'essentiel dans la présente demande.

La présente invention résout le problème de la détection de corps situés au voisinage d'une interface de type eau/air en proposant un procédé et un système permettant d'évaluer la position d'un corps par rapport à une interface notamment de type eau/air, de discriminer les corps en mouvement des corps stationnaires, de générer des alertes, d'élaborer des statistiques, de donner des éléments de trajectographie et de permettre la détection d'entrées ou de sorties de corps dans la zone surveillée.

### Procédé

La présente invention concerne un procédé pour détecter un corps dans une zone située à proximité d'une interface entre deux milieux liquides et/ou gazeux ayant des indices de réfraction différents, notamment du type eau/air ; au sens de la présente invention "à proximité" désigne également "à l'interface " ; ledit procédé comprenant les étapes suivantes :
- l'étape de réaliser au moins une image vidéo de ladite interface et de ladite zone, à partir d'au moins un point d'observation, chacun des points d'observation étant situé d'un côté de ladite interface ;
- l'étape de produire des signaux électriques représentatifs de chaque image vidéo ;
- l'étape de numériser les signaux électriques de manière à produire des données correspondant à chaque image vidéo ;
- l'étape de traiter lesdites données en discriminant les données correspondant à l'image vidéo d'un corps réel de celles correspondant à une image vidéo apparente générée par ladite interface,
ledit procédé étant tel que, pour traiter lesdites données en discriminant les données correspondant à ladite image vidéo d'un corps réel de celles correspondant à ladite image vidéo apparente générée par ladite interface, on génère des calottes (au sens de la présente invention) et/ou on associe à chaque pixel de ladite image vidéo des primitives (au sens de la présente invention),
ledit procédé étant tel que, lorsque des calottes sont générées, l'étape de traiter lesdites données comprend les étapes suivantes :
- l'étape d'associer à chaque calotte des caractéristiques ;
- l'étape de déduire la présence d'un corps si les caractéristiques dépassent un seuil SC prédéterminé.

Dans une réalisation, ledit corps étant éclairé par de la lumière produisant des reflets sur ladite interface,
ledit procédé comprend l'étape suivante lorsque des calottes sont générées :
- l'étape de réaliser au moins une image vidéo de ladite interface et de ladite zone, en mettant en oeuvre un filtre polarisant éliminant au moins en partie les reflets de la lumière sur ladite interface.

Dans une réalisation le procédé est plus particulièrement destiné à discriminer entre un corps stationnaire et un corps en mouvement ;
ledit procédé comprend en outre les étapes suivantes lorsque des calottes sont générées :
- l'étape d'itérer à intervalles de temps déterminés le processus de déduction de la présence d'un corps faisant l'objet de l'invention ;
- l'étape de calculer le nombre de fois où le corps est détecté pendant une période de temps déterminée T1 ;
- l'étape de discriminer, en un point de ladite zone, entre les corps qui sont présents un nombre de fois supérieur à un seuil déterminé S1 (lesdits corps étant ci-après désignés les corps stationnaires) et les corps qui sont présents un nombre de fois inférieur audit seuil déterminé S1 (lesdits corps étant ci-après désignés les corps en mouvement).

Selon une réalisation, le procédé est plus particulièrement destiné à déterminer si, par rapport à un desdits points d'observation, un corps stationnaire est situé :
- de l'autre côté de l'interface,
- du même côté de l'interface,
- à l'interface;
les images vidéo étant prises à intervalles de temps déterminés à partir dudit point d'observation;
ledit procédé comprend en outre les étapes suivantes :
- l'étape de calculer une fluctuation temporelle moyenne des niveaux de gris desdites images vidéo dudit corps,

**Cas où le corps est situé de l'autre côté de l'interface:**
- l'étape de détecter, en un point de ladite zone, les corps qui ont une fluctuation temporelle moyenne des niveaux de gris supérieure à un seuil déterminé S3 (lesdits corps étant ci-après désignés les corps situés de l'autre côté de l'interface).

**Cas où le corps est situé du même côté de l'interface :**
- l'étape de détecter, en un point de ladite zone, les corps qui ont une fluctuation temporelle moyenne des niveaux de gris inférieure à un seuil déterminé S4 (lesdits corps étant ci-après désignés les corps situés du même côté de l'interface), ledit seuil S4 étant inférieur au seuil S3

**Cas où le corps est situé à l'interface :**
- l'étape de détecter, en un point de ladite zone, les corps qui ont une fluctuation temporelle moyenne des niveaux de gris comprise entre le seuil S3 et le seuil S4 (lesdits corps étant ci-après désignés les corps situés à l'interface).

Dans une réalisation, le procédé est plus particulièrement destiné à déterminer si, par rapport à un desdits points d'observation, un corps stationnaire est situé :
- de l'autre côté de l'interface,
- du même côté de l'interface,
- à l'interface,
les images vidéo étant prises à intervalles de temps déterminés à partir dudit point d'observation;
ledit procédé comprenant en outre l'étape suivante :
- l'étape de procéder à une analyse stéréoscopique du corps stationnaire par rapport à ladite interface.

Dans une réalisation, le procédé comporte en outre l'étape suivante :
- l'étape d'émettre un signal d'alerte selon les critères de détection appliqués dans l'un ou l'autre des cas faisant l'objet des réalisations précédentes, notamment en présence d'un corps stationnaire situé sous la surface d'une interface eau/air.

Dans une réalisation, le procédé est plus particulièrement destiné à détecter l'apparition de nouveaux corps dans ladite zone;
ledit procédé comprend en outre lorsque des calottes sont générées :
- l'étape d'itérer à intervalles de temps déterminés le processus de déduction de la présence d'un corps faisant l'objet de l'invention ;
- l'étape de calculer le nombre de fois où le corps est détecté pendant une période de temps déterminée T2 ; ladite période de temps T2 étant choisie supérieure à la durée des phénomènes liés aux corps que l'on détecte ;
- l'étape de discriminer, en un point de ladite zone, entre les corps qui sont présents un nombre de fois supérieur à un seuil déterminé S2 (lesdits corps étant ci-après désignés les corps habituellement présents) et les corps qui sont présents un nombre de fois inférieur audit seuil déterminé S2 (lesdits corps étant ci-après désignés les corps nouveaux).

Dans une réalisation, le procédé est plus particulièrement destiné à détecter les corps nouveaux et stationnaires ; ledit procédé est-tel que la période de temps T1 est choisie inférieure à la période de temps T2.

Dans une réalisation, le procédé est plus particulièrement destiné à fournir une estimation statistique du temps d'occupation de ladite zone Z par au moins un corps pendant une période de temps déterminée T ;
ledit procédé comprenant les étapes suivantes lorsque des calottes sont générées :
- l'étape d'effectuer une partition de ladite zone en zones élémentaires Δz,
- l'étape de mettre en oeuvre dans une zone élémentaire Δz, pendant des intervalles de temps élémentaires Δt le processus de déduction de la présence d'un corps (601) faisant l'objet de la revendication 1 ;
- l'étape de calculer le nombre de fois Δt/T où un corps est présent dans une zone élémentaire Δz pendant la période de temps déterminée T.

Dans une réalisation, le procédé comprend en outre l'étape suivante lorsque des calottes sont générées :
- l'étape de calculer la trajectoire des corps (601) dont la présence a été détectée.

Dans une réalisation, le procédé est plus particulièrement destiné à détecter la disparition d'un corps dans une zone déterminée, notamment la disparition d'un nageur en bordure de mer ;
ledit procédé comprend les étapes suivantes :
- l'étape de détecter l'arrêt d'une trajectoire à la frontière de ladite zone, notamment en dehors des limites de surveillance.

L'invention concerne également un procédé pour détecter un corps dans une zone située à proximité d'une interface entre deux milieux liquides et/ou gazeux ayant des indices de réfraction différents, notamment du type eau/air ; au sens de la présente invention "à proximité" désigne également "à l'interface " ; ledit procédé comprenant les étapes suivantes :
- l'étape de réaliser au moins une image vidéo de ladite interface et de ladite zone, à partir d'au moins un point d'observation, chacun des points d'observation étant situé d'un côté de ladite interface ;
- l'étape de produire des signaux électriques représentatifs de chaque image vidéo ;
- l'étape de numériser les signaux électriques de manière à produire des données correspondant à chaque image vidéo ;
- l'étape de traiter lesdites données en discriminant les données correspondant à l'image vidéo d'un corps réel de celles correspondant à une image vidéo apparente générée par ladite interface,
ledit procédé étant tel que, pour traiter lesdites données en discriminant les données correspondant à ladite image vidéo d'un corps réel de celles correspondant à ladite image vidéo apparente générée par ladite interface, on génère des calottes (au sens de la présente invention) et/ou on associe à chaque pixel de ladite image vidéo des primitives (au sens de la présente invention),
ledit procédé étant plus particulièrement destiné à détecter un corps stationnaire à proximité de ladite interface ; ledit procédé étant tel que l'étape de traiter lesdites données comprend les étapes suivantes lorsque des primitives sont associées à chaque pixel :
- l'étape de valider une primitive comme stationnaire si pendant n intervalles de temps successifs Δt composant une période de temps de temps déterminée T5, ladite primitive est réalisée (au sens de la présente invention) au moins un nombre de fois supérieur à un seuil S5 déterminé.
- l'étape de calculer et de rechercher les images virtuelles de corps stationnaires (au sens de la présente invention).

Dans une réalisation, le procédé est plus particulièrement destiné à détecter un corps stationnaire nouveau à proximité de ladite interface;
ledit procédé comprenant les étapes suivantes lorsque des primitives sont associées à chaque pixel :
- l'étape d'itérer, à intervalles de temps successifs Δt composant une période de temps de temps déterminée T6, le processus de détection de la présence d'un corps stationnaire faisant l'objet de la revendication 12,
- l'étape de calculer le nombre de fois où un corps est détecté comme étant stationnaire pendant ladite période de temps déterminée T6 ;
- l'étape de discriminer, en un point de ladite zone, entre un corps stationnaire qui est présent un nombre de fois supérieur à un seuil déterminé S6 et un corps qui est présent un nombre de fois inférieur audit seuil déterminé S6 (ledit corps étant ci-après désigné le nouveau corps stationnaire).

Dans une réalisation, le procédé est plus particulièrement destiné à déterminer si, par rapport à un desdits points d'observation, un corps stationnaire nouveau est situé :
- de l'autre côté de l'interface,
- du même côté de l'interface,
- à l'interface;
les images vidéo étant prises à intervalles de temps déterminés à partir dudit point d'observation;
ledit procédé comprenant les étapes suivantes lorsque des primitives sont associées à chaque pixel :
- l'étape d'itérer, à intervalles de temps successifs Δt composant une période de temps déterminée T7, le processus de détection de la présence d'un corps stationnaire faisant l'objet de l'invention,
- l'étape de calculer le nombre de fois où un corps est détecté comme étant stationnaire et nouveau pendant ladite période de temps déterminée T7 ; ladite période de temps T7 étant choisie supérieure à la durée des phénomènes que l'on observe ; ladite période de temps T7 étant inférieure à ladite période de temps T6,

**Cas où le corps est situé de l'autre côté de l'interface:**
- l'étape de détecter, en un point de ladite zone, entre un corps qui est présent un nombre de fois supérieur à un seuil déterminé S7 et un corps qui est présent un nombre de fois inférieur audit seuil déterminé S7 (ledit corps étant ci-après désigné le nouveau corps stationnaire situé de l'autre côté de l'interface;

**Cas où le corps est situé du même côté de l'interface:**
- l'étape de détecter, en un point de ladite zone, entre un corps qui est présent un nombre de fois supérieur à un seuil déterminé S8 et un corps qui est présent un nombre de fois inférieur audit seuil déterminé S8 (ledit corps étant ci-après désigné le nouveau corps stationnaire situé du même côté de l'interface; ledit seuil S8 étant inférieur au seuil S7 ;

**Cas où le corps est situé à l'interface:**
- l'étape de détecter, en un point de ladite zone, un corps qui est présent un nombre de fois compris entre le seuil S7 et le seuil S8
lesdits corps étant ci-après désignés les corps situés à l'interface.

Dans une réalisation, le procédé comporte en outre l'étape d'émettre un signal d'alerte selon les critères de détection appliqués dans l'un ou l'autre des cas faisant l'objet de l'invention, notamment en présence d'un corps stationnaire situé sous la surface d'une interface eau/air.

L'invention concerne également un système pour détecter un corps dans une zone située à proximité d'une interface entre deux milieux liquides et/ou gazeux ayant des indices de réfraction différents, notamment du type eau/air ; au sens de la présente invention "à proximité" désigne également "à l'interface" ; Conformément à l'invention, ledit système comprend :
- des moyens, notamment une caméra vidéo, pour réaliser au moins une image vidéo de ladite interface et de ladite zone, à partir d'au moins un point d'observation, chacun des points d'observation étant situé d'un côté de ladite interface;
- des moyens de conversion numériques pour produire des données numériques à partir des signaux électriques représentatifs de chaque image vidéo ;
- des moyens de traitement informatique pour discriminer les données correspondant à l'image vidéo d'un corps réel de celles correspondant à une image vidéo apparente générée par ladite interface ; lesdits moyens de traitement informatique pour discriminer les données correspondant à l'image vidéo d'un corps réel de celles correspondant à l'image vidéo apparente générée par ladite interface comprennent des moyens de calcul pour lorsque des calottes sont générées :
- générer des calottes (au sens de la présente invention), et/ou
- associer des primitives à chaque pixel de ladite image vidéo (au sens de la présente invention);
ledit système étant tel que lesdits moyens de traitement informatique comprennent des moyens de calcul pour :
- associer à chaque calotte des caractéristiques ;
- déduire la présence d'un corps si les caractéristiques dépassent un seuil SC prédéterminé.

Dans une réalisation, ledit corps étant éclairé par de la lumière produisant des reflets sur ladite interface; ledit système étant tel que, lorsque des calottes sont générées, lesdits moyens pour réaliser au moins une image vidéo de ladite interface et de ladite zone comprennent un filtre polarisant éliminant au moins en partie les reflets de la lumière sur ladite interface.

Dans une réalisation, le système est plus particulièrement destiné à discriminer entre un corps stationnaire et un corps en mouvement ;
ledit système comprend en outre :
- des moyens d'itération pour itérer à intervalles de temps déterminés le processus de déduction de la présence d'un corps faisant l'objet de l'invention;
lesdits moyens de calcul comprenant, lorsque des calottes sont générées :
- des totalisateurs pour calculer le nombre de fois où le corps est détecté pendant une période de temps déterminée T1 ;
- des discriminateurs pour discriminer, en un point de ladite zone, entre les corps qui sont présents un nombre de fois supérieur à un seuil déterminé S1 (lesdits corps étant ci-après désignés les corps stationnaires) et les corps qui sont présents un nombre de fois inférieur audit seuil déterminé S1 (lesdits corps étant ci-après désignés les corps en mouvement).

Dans une réalisation, le système est plus particulièrement destiné à déterminer si, par rapport à un desdits points d'observation, un corps stationnaire est situé :
- de l'autre côté de l'interface,
- du même côté de l'interface,
- à l'interface;
les images vidéo étant prises à intervalles de temps déterminés à partir dudit point d'observation;
lesdits moyens de calcul comprenant en outre :
- des moyens pour calculer la fluctuation temporelle moyenne des niveaux de gris desdites images vidéo dudit corps,

**Cas où le corps est situé de l'autre côté de l'interface :**
lesdits moyens de calcul comprennent en outre :
- des moyens de détection S3 pour détecter, en un point de ladite zone, les corps qui ont une fluctuation temporelle moyenne des niveaux de gris supérieure à un seuil déterminé S3 (lesdits corps étant ci-après désignés les corps situés de l'autre côté de l'interface),

**Cas où le corps est situé du même côté de l'interface:**
- des moyens de détection S4 pour détecter, en un point de ladite zone, les corps qui ont une fluctuation temporelle moyenne des niveaux de gris inférieure à un seuil déterminé S4 (lesdits corps étant ci-après désignés les corps situés du même côté de l'interface), ledit seuil S4 étant inférieur au seuil S3.

**Cas où le corps est situé à l'interface:**
- des moyens de détection S3/S4 pour détecter, en un point de ladite zone, les corps qui ont une fluctuation temporelle moyenne des niveaux de gris comprise entre le seuil S3 et le seuil S4 (lesdits corps étant ci-après désignés les corps situés à l'interface).

Dans une réalisation, le système est plus particulièrement destiné à déterminer si, par rapport à un desdits points d'observation, un corps stationnaire est situé :
- de l'autre côté de l'interface,
- du même côté de l'interface,
- à l'interface;
les images vidéo étant prises à intervalles de temps déterminés à partir dudit point d'observation;
ledit système comprenant en outre:
- des moyens d'analyse stéréoscopique du corps stationnaire par rapport à ladite interface.

Dans une réalisation, le système comporte en outre :
- des moyens d'émission pour émettre un signal d'alerte selon les critères de détection appliqués dans l'un ou l'autre des cas faisant l'objet d'une réalisation, notamment en présence d'un corps stationnaire situé sous la surface d'une interface eau/air.

Dans une réalisation, le système est plus particulièrement destiné à détecter l'apparition de nouveaux corps dans ladite zone;
ledit système comprenant en outre, lorsque des calottes sont générées :
- des moyens d'itération pour itérer à intervalles de temps déterminés le processus de déduction de la présence d'un corps faisant l'objet de l'invention ;
lesdits moyens de calcul comprenant en outre des moyens pour :
- calculer le nombre de fois où le corps est détecté pendant une période de temps déterminée T2 ; ladite période de temps T2 étant choisie supérieure à la durée des phénomènes liés aux corps que l'on détecte ;
- discriminer, en un point de ladite zone, entre les corps qui sont présents un nombre de fois supérieur à un seuil déterminé S2 (lesdits corps étant ci-après désignés les corps habituellement présents) et les corps qui sont présents un nombre de fois inférieur audit seuil déterminé S2 (lesdits corps étant ci-après désignés les corps nouveaux).

Dans une réalisation, le système est plus particulièrement destiné à détecter les corps nouveaux et stationnaires ; ledit système étant tel que la période de temps T1 est choisie inférieure à la période de temps T2.

Dans une réalisation, le système est plus particulièrement destiné à fournir une estimation statistique du temps d'occupation de ladite zone Z par au moins un corps pendant une période de temps déterminée T ;
ledit système comprenant les moyens suivants lorsque des calottes sont générées :
- des moyens de partition pour effectuer une partition de ladite zone en zones élémentaires Δz,
- des moyens d'itération pour itérer dans une zone élémentaire Δz, pendant des intervalles de temps élémentaires Δt, le processus de déduction de la présence d'un corps faisant l'objet de l'invention;
lesdits moyens de calcul comprenant en outre des moyens pour calculer le nombre de fois Δt/T où un corps est présent dans une zone élémentaire Δz pendant la période de temps déterminée T.

Dans une réalisation, lesdits moyens de calcul comprennent en outre des moyens pour calculer la trajectoire des corps dont la présence a été détectée.

Dans une réalisation, le système est plus particulièrement destiné à détecter la disparition d'un corps dans une zone déterminée, notamment la disparition d'un nageur en bordure de mer ;
ledit système comprend en outre :
- des moyens de détection pour détecter l'arrêt d'une trajectoire à la frontière de ladite zone, notamment en dehors des limites de surveillance.

L'invention concerne également un système pour détecter un corps dans une zone située à proximité d'une interface entre deux milieux liquides et/ou gazeux ayant des indices de réfraction différents, notamment du type eau/air ; au sens de la présente invention "à proximité" désigne également "à l'interface " ; ledit système comprenant :
- des moyens, notamment une caméra vidéo, pour réaliser au moins une image vidéo de ladite interface et de ladite zone, à partir d'au moins un point d'observation, chacun des points d'observation étant situé d'un côté de ladite interface;
- des moyens de conversion numériques pour produire des données numériques à partir des signaux électriques représentatifs de chaque image vidéo ;
- des moyens de traitement informatique pour discriminer les données correspondant à l'image vidéo d'un corps réel de celles correspondant à une image vidéo apparente générée par ladite interface;
lesdits moyens de traitement informatique pour discriminer les données correspondant à l'image vidéo d'un corps réel de celles correspondant à l'image vidéo apparente générée par ladite interface comprennent des moyens de calcul pour :
- générer des calottes (au sens de la présente invention), et/ou
- associer des primitives à chaque pixel de ladite image vidéo (au sens de la présente invention); plus particulièrement destiné à détecter un corps stationnaire à proximité de ladite interface;
ledit système étant tel que lesdits moyens de traitement informatique pour discriminer les données correspondant à l'image vidéo d'un corps réel de celles correspondant à l'image vidéo apparente générée par ladite interface, comprennent des moyens de calcul pour, lorsque des primitives sont associées à chaque pixel :
- valider une primitive comme stationnaire si pendant n intervalles de temps successifs Δt composant une période de temps déterminée T5, ladite primitive est réalisée (au sens de la présente invention) au moins un nombre de fois supérieur à un seuil S5 déterminé,
- calculer et rechercher les images virtuelles de corps stationnaires (au sens de la présente invention).

Dans une réalisation, le système est plus particulièrement destiné à détecter un corps stationnaire nouveau à proximité de ladite interface ;
ledit système comprenant, lorsque des primitives sont associées à chaque pixel :
- des moyens d'itération pour itérer, à intervalles de temps successifs Δt composant une période de temps de temps déterminée T6, le processus de détection de la présence d'un corps stationnaire faisant l'objet de la revendication 27,
lesdits moyens de calcul comprenant :
- des moyens pour calculer le nombre de fois où un corps est détecté comme étant stationnaire pendant ladite période de temps déterminée T6 ;
- des moyens de discrimination pour discriminer, en un point de ladite zone, entre un corps stationnaire qui est présent un nombre de fois supérieur à un seuil déterminé S6 et un corps qui est présent un nombre de fois inférieur audit seuil déterminé S6 (ledit corps étant ci-après désigné le nouveau corps stationnaire).

Dans une réalisation, le système est plus particulièrement destiné à déterminer si, par rapport à un desdits points d'observation, un corps stationnaire nouveau est situé :
- de l'autre côté de l'interface,
- du même côté de l'interface,
- à l'interface;
les images vidéo étant prises à intervalles de temps déterminés à partir dudit point d'observation ;
ledit système comprenant en outre, lorsque des primitives sont associées à chaque pixel :
- des moyens d'itération pour itérer, à intervalles de temps successifs Δt composant une période de temps de temps déterminée T7, le processus de détection de la présence d'un corps stationnaire faisant l'objet de l'invention ;
lesdits moyens de calcul comprennent en outre
- des moyens pour calculer le nombre de fois où un corps est détecté comme étant stationnaire et nouveau pendant ladite période de temps déterminée T7 ; ladite période de temps T7 étant choisie supérieure à la durée des phénomènes que l'on observe ; ladite période de temps T7 étant inférieure à ladite période de temps T6,

**Cas où le corps est situé de l'autre côté de l'interface:**
- des moyens de détection pour détecter, en un point de ladite zone, entre un corps qui est présent un nombre de fois supérieur à un seuil déterminé S7 et un corps qui est présent un nombre de fois inférieur audit seuil déterminé S7 (ledit corps étant ci-après désigné le nouveau corps stationnaire situé de l'autre côté de l'interface) ;

**Cas où le corps est situé du même côté de l'interface:**
- des moyens de détection pour détecter, en un point de ladite zone, entre un corps qui est présent un nombre de fois supérieur à un seuil déterminé S8 et un corps qui est présent un nombre de fois inférieur audit seuil déterminé S8 (ledit corps étant ci-après désigné le nouveau corps stationnaire situé du même côté de l'interface) ; ledit seuil S8 étant inférieur au seuil S7 ;

**Cas où le corps est situé à l'interface :**
- des moyens de détection pour détecter, en un point de ladite zone, un corps qui est présent un nombre de fois compris entre le seuil S7 et le seuil S8 (lesdits corps étant ci-après désignés les corps situés à l'interface).

Dans une réalisation, le système comporte en outre des moyens d'émission pour émettre un signal d'alerte selon les critères de détection appliqués dans l'un ou l'autre des cas faisant l'objet de la réalisation précédente, notamment en présence d'un corps stationnaire situé sous la surface d'une interface eau/air.

L'invention concerne également un procédé selon l'une des réalisations précédentes plus particulièrement destiné à la surveillance d'une piscine.

L'invention concerne également un système selon l'une des réalisations précédentes plus particulièrement destiné à la surveillance d'une piscine.

L'invention concerne également une application du procédé ou du système selon l'une quelconque des réalisations précédentes à la surveillance d'une piscine.

### Définitions

Les définitions, ci-après explicitées, des termes techniques employées sont illustrées par des exemples se référant aux figures 1a, 1b, 1c, 2a, 2b, 2c, 3a, 3b, 4a, 4b et 5. Ces figures représentent une image composée d'un pavage de pixels sur lesquels on a indiqué leur valeur.

### Image, Pavage, Pixel, Valeur de pixel

On appelle pixel : une zone élémentaire d'une image obtenue en créant un pavage, généralement régulier, de ladite image. Lorsque l'image provient d'un capteur tel qu'une caméra vidéo, ou une caméra thermique ou acoustique, on peut généralement associer une valeur à ce pixel : la couleur ou le niveau de gris pour une image vidéo, la température pour une caméra thermique.

### Exemple :

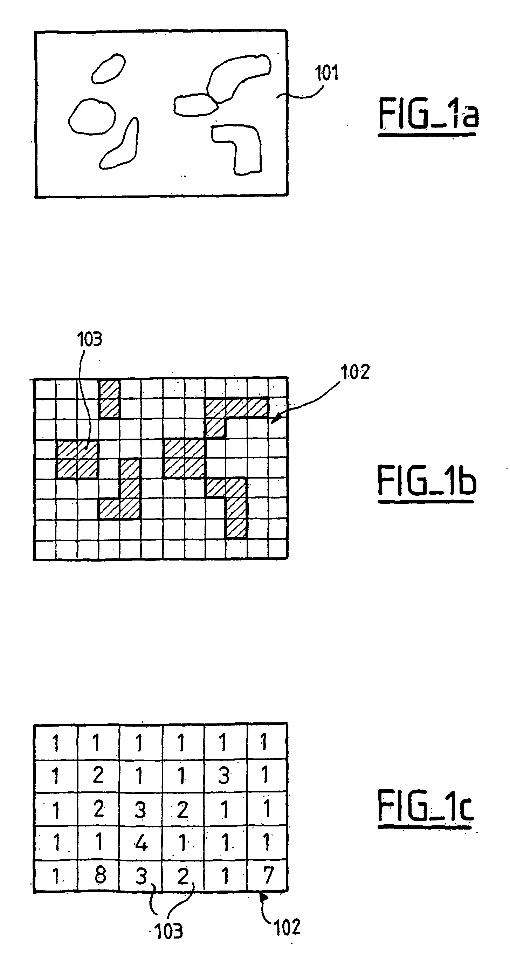

On a représenté sur la figure 1a une image 101 symbolisée par un homme, nageant à la surface d'une piscine, dont les contours ne sont pas parfaitement visibles. En effet, parmi les applications de la présente invention, l'une concerne plus particulièrement la surveillance des piscines et c'est en se référant à cette application que les traits techniques composant l'invention seront exposés. Sur la figure 1b, on a superposé à cette image un pavage 102 de pixels 103. On a représenté sur la figure 1c un pavage sur lequel on a indiqué les valeurs des pixels.

### Pixels adjacents

Deux pixels du pavage sont dits adjacents si leurs bords ou leurs coins se touchent.

### Chemin sur pavage

Un chemin sur le pavage est un ensemble ordonné et fini de pixels où chaque pixel est adjacent à son suivant (au sens de l'ordonnancement). La taille d'un chemin est donnée par le nombre de pixels le constituant.

### Pixels jointifs

Deux pixels sont dits jointifs lorsque le chemin le plus court débutant à l'un et finissant à l'autre est de taille inférieure à un nombre déterminé de pixels.

### Ensemble connexe de pixels

Un ensemble de pixels est dit connexe si pour chaque paire de pixels de l'ensemble, il existe un chemin débutant à l'un et finissant à l'autre, ce chemin étant constitué de pixels de l'ensemble.

### Exemple :

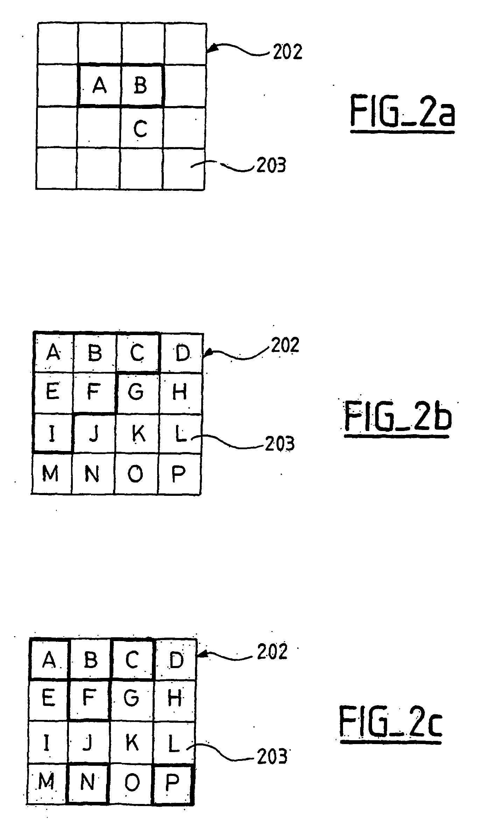

La figure 2a représente un pavage 202 de 16 pixels 203, parmi lesquels on a mis en évidence 3 pixels, dénommés A, B et C. On peut remarquer que les pixels A et B sont adjacents et que les pixels B et C sont adjacents. Il existe donc un chemin (A->B->C) qui relie ces pixels. L'ensemble de pixels {A, B, C} est donc connexe.

Sur la figure 2b, on a également représenté un pavage 202 de 16 pixels 203, désignés par les lettres A à P. Si on sélectionne l'ensemble de pixels {A, B, C, E, F, I}, on peut constater que les pixels A et B sont adjacents, que les pixels B et C sont adjacents, etc. Il existe donc des chemins : A -> B -> C et C-> B -> F -> E -> I. Chaque couple de pixel de l'ensemble est relié par un chemin de pixels appartenant à l'ensemble, l'ensemble de pixels {A, B, C, E, F, I} est par conséquent connexe.

Sur la figure 2c, on a représenté le même pavage 202 que sur la figure 2b, en sélectionnant l'ensemble de pixels {A, C, F, N, P}. Il existe un chemin :A->C->F qui relie les pixels A, C et F, mais il n'existe pas de chemin de pixels appartenant à l'ensemble reliant N et P, ou bien N à A. L'ensemble de pixels {A, C, F, N, P) n'est pas connexe. Par contre, l'ensemble {A, C, F} est connexe.

### Pixel adjacent à un ensemble

Un pixel n'appartenant pas à un ensemble est dit adjacent audit ensemble lorsqu'il est jointif à au moins un pixel appartenant audit ensemble

### Calotte

On appelle calotte sup. (resp. inf) : un ensemble connexe de pixels dont les valeurs sont supérieures (resp. inférieures) à une valeur prédéterminée et vérifiant la condition suivante :
les valeurs des pixels adjacents à l'ensemble (non compris dans l'ensemble) sont inférieures ou égales (respectivement. supérieures ou égales) à ladite valeur prédéterminée,
de sorte que les valeurs des pixels situés dans ledit ensemble sont supérieures (respectivement inférieures) aux valeurs des pixels adjacents à l'ensemble.

On appelle calotte une calotte sup. ou une calotte inf.

### Niveau d'une calotte

On appelle niveau d'une calotte ladite valeur prédéterminée.

### Exemple :

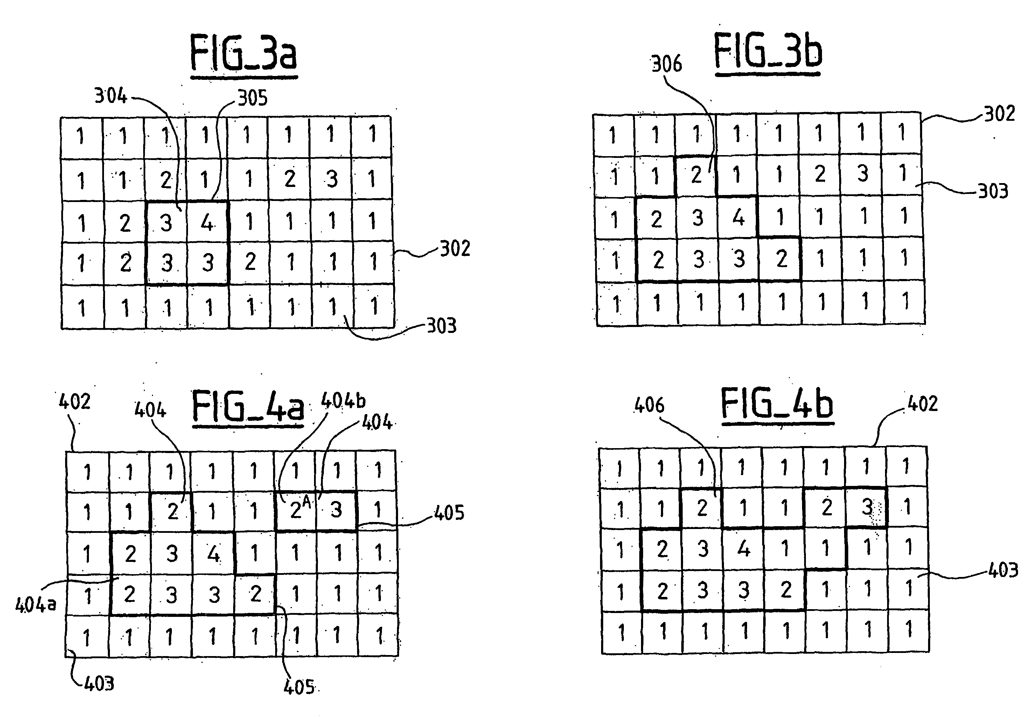

Les figures 3a, 3b, 3c et 3d représentent des images composées de pavages 302 de pixels 303 sur lesquels on a indiqué leurs valeurs.

La figure 3a représente (à l'intérieur 304 du trait fort 305) un ensemble de 4 pixels. Cet ensemble a les propriétés suivantes :
- il est connexe au sens de la définition donnée,
- les valeurs de tous les pixels de l'ensemble sont supérieures à 1,
- les (douze) pixels adjacents à l'ensemble ont pour certains une valeur supérieure à 1.

L'ensemble de pixels considéré n'est donc pas une calotte sup. de niveau 1.

Par contre, cet ensemble de pixel a les propriétés suivantes :
- il est connexe au sens de la définition donnée,
- les valeurs de tous les pixels de l'ensemble sont supérieures à 2,
- les (douze) pixels jointifs à l'ensemble ont tous une valeur inférieure ou égale à 2.

Cette ensemble de pixel est donc une calotte sup. de niveau 2.

La figure 3b représente un ensemble 306 de huit pixels présentant les propriétés suivantes :
- il est connexe au sens de la définition donnée,
- les valeurs de tous les pixels de l'ensemble sont supérieures à 1,
- les (dix-huit) pixels jointifs à l'ensemble ont tous une valeur inférieure ou égale à 1.

L'ensemble de pixels considéré est donc une calotte sup. de niveau 1.

La figure 4a représente un pavage 402 de pixels 403. Dans ce pavage 402 on a isolé par un trait fort 405 un ensemble 404 de dix pixels répartis en deux zones 404 a et 404b. Cet ensemble de pixel 404 présente les propriétés suivantes :
- il n'est pas connexe au sens de la définition donnée,
- les valeurs de tous les pixels sont supérieures à 1
- les (vingt-cinq) pixels jointifs à l'ensemble ont tous une valeur inférieure ou égale à 1.

Les dix pixels de cet ensemble non connexe ne constituent donc pas une calotte sup. de niveau 1.

La figure 4b représente un ensemble 406 de douze pixels présentant les propriétés suivantes :
- il est connexe au sens de la définition donnée,
- les valeurs des pixels ne sont pas toutes supérieures à 1,
- les (vingt-quatre) pixels jointifs à l'ensemble ont tous une valeur inférieure ou égale à 1.

L'ensemble de pixels considéré n'est donc pas une calotte sup. de niveau 1.

### Caractéristique(s) associée(s) à une calotte

On appelle caractéristique(s) associée(s) à une calotte : une ou des valeurs obtenues par des opérations arithmétiques et/ou logiques prédéfinies à partir des valeurs des pixels de la calotte, et/ou des positions des pixels dans le pavage, et/ou du niveau de la calotte.

Par exemple, une opération arithmétique pourrait consister à utiliser la somme des écarts entre la valeur de chaque pixel de la calotte et le niveau de la calotte, ou encore la taille (nombre de pixels) de ladite calotte.

### Calotte réalisée

On appelle calotte réalisée : une calotte dont les caractéristiques associées sont dans une plage de valeur déterminée.

### Primitive associée à un pixel

On appelle primitive associée à un pixel : une valeur binaire (c'est-à-dire 0 ou 1) ou une valeur booléenne (c'est-à-dire vraie ou fausse, dans ce cas on conviendra que vraie correspond à 1 et faux correspond à 0) obtenue par des opérations arithmétiques et/ou logiques prédéfinies à partir de la valeur dudit pixel et de celles des pixels qui lui sont jointifs.

### Exemple :

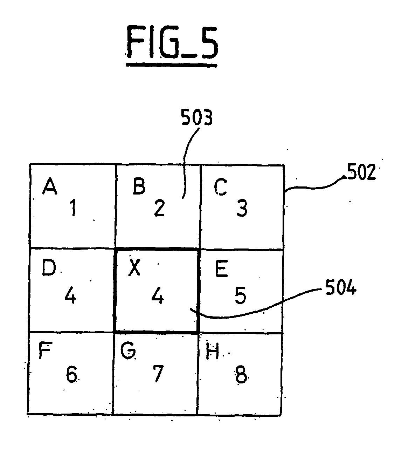

Sur la figure 5 on a représenté un pavage 502 de neuf pixels 503. L'un d'entre eux X dont la valeur est 4 et référencé 504. Ce pixel 504 est entouré des pixels A, B, C, D, E, F, G et H dont les valeurs respectives sont 1, 2, 3, 4, 5, 6, 7 et 8.

Si, pour la définition des pixels jointifs, on choisit 2 comme longueur maximale du chemin, on peut associer au pixel 504 les primitives Pa, Pb, Pc, Pd, Pe, Pf, Pg, et Ph suivantes :
Pa : => résultat logique du test : la valeur de X est supérieure à la valeur de A.
Pb : => résultat logique du test : la valeur de X est supérieure à la valeur de B.

Et ainsi de suite pour C, D, E, F, G, H

On obtient les primitives Pa, Pb, Pc, Pd, Pe, Pf, Pg et Ph dont les valeurs possibles sont "vrai" et "faux", qu'on peut encore écrire respectivement 1 et 0.

### Primitive réalisée

On dira qu'une primitive est réalisée si sa valeur est égale à 1.

On obtient, dans le cas l'exemple précédent décrit, le tableau suivant :
Pa : faux ⇔ 0 : la primitive n'est pas réalisée
Pb : faux ⇔ 0 : la primitive n'est pas réalisée
Pc : faux ⇔ 0 : la primitive n'est pas réalisée
Pd : faux ⇔ 0 : la primitive n'est pas réalisée
Pe : vrai ⇔ 1 : la primitive est réalisée
Pf : vrai ⇔ 1 : la primitive est réalisée
Pg : vrai ⇔ 1 : la primitive est réalisée
Ph: vrai ⇔ 1 : la primitive est réalisée

### Image virtuelle de corps stationnaires

On appelle Image virtuelle de corps stationnaire un ensemble connexe de pixels dont un nombre P1 de primitives est réalisé, ledit nombre P1 étant compris dans un intervalle préalablement choisi.

### Description détaillée

D'autres caractéristiques et avantages de l'invention apparaîtront à la lecture de variantes de réalisation, données à titre d'exemple indicatif et non limitatif, et de :

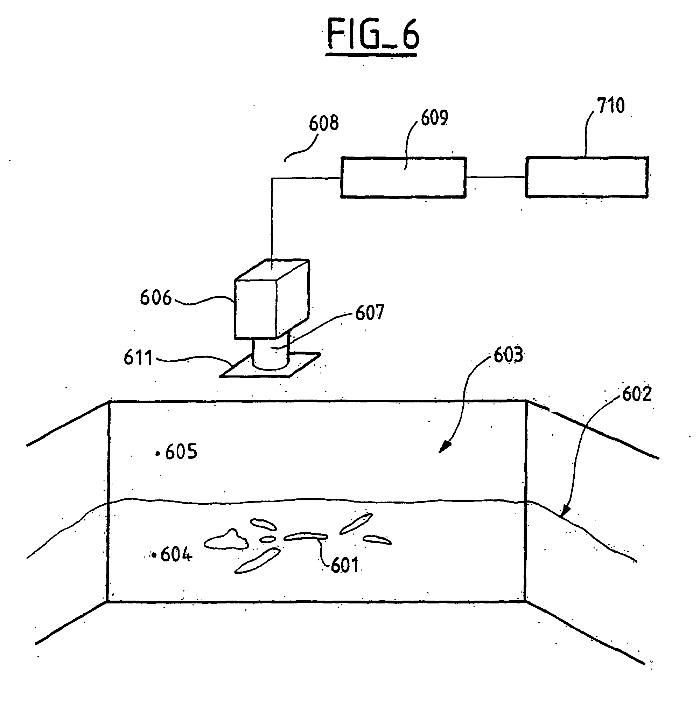

- la figure 6 qui représente, dans le cas d'une piscine, une vue générale du système permettant la détection de corps situés au voisinage d'une interface de type eau/air, notamment la détection et la surveillance des nageurs,

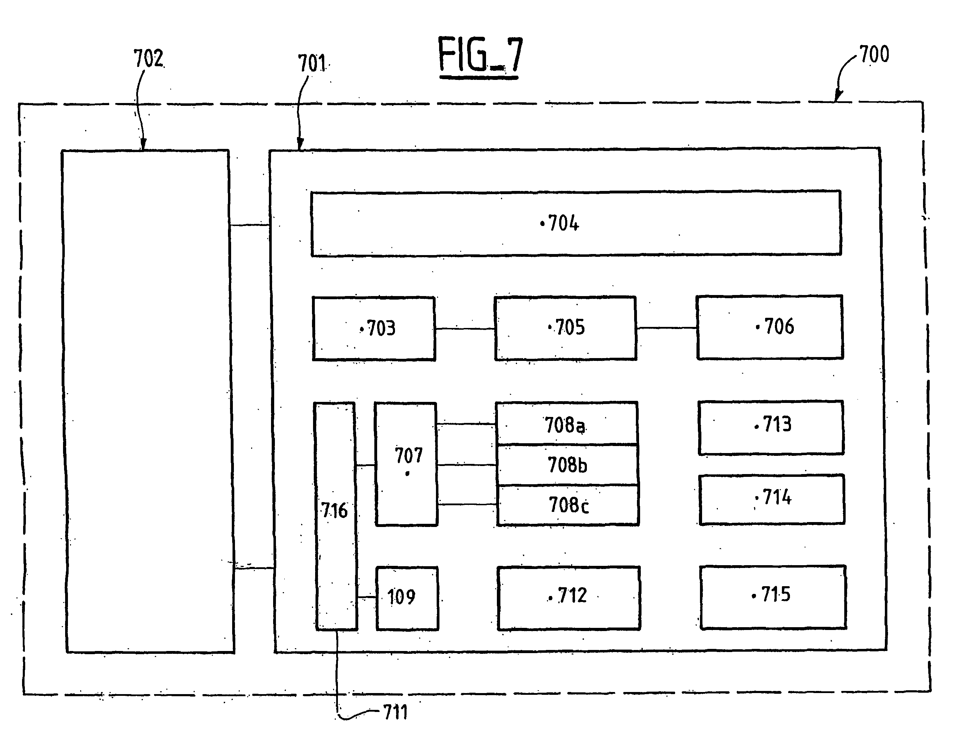

- la figure 7 qui représente un organigramme général des différentes parties du système et des différentes interactions entre lesdites parties.

On va maintenant décrire le système et les différentes parties qui le composent en se référant aux figures 6 et 7.

Le système selon l'invention comprend des moyens, ci-après décrits, pour détecter un corps 601, dans une zone 603 située à proximité d'une interface 602 entre deux milieux liquides 604 et/ou gazeux 605 ayant des indices de réfraction différents, notamment du type eau/air. En l'espèce, le corps 601, représenté, est celui d'un nageur évoluant à la surface de l'eau d'une piscine. Au sens de la présente invention "à proximité" désigne également "à l'interface".

Le système comprend des moyens, notamment une caméra vidéo 606, pour réaliser au moins une image vidéo de ladite interface 603 et de ladite zone 602, à partir d'au moins un point d'observation 607. Ces images sont représentées par des signaux électriques 608.

Chacun des points d'observation 607 est situé d'un côté de ladite interface 602. En l'espèce, le point d'observation 607 est situé au-dessus de la piscine. La caméra vidéo 606 est aérienne : elle est à l'air libre. Ledit système comprend en outre des moyens de conversion numériques 609 pour produire des données numériques à partir des signaux électriques 608 représentatifs de chaque image vidéo. Ledit système comprend en outre des moyens de traitement informatique pour discriminer les données correspondant à l'image vidéo d'un corps réel (figure 1a) de celles correspondant à l'image vidéo apparente (figure 1b) générée par ladite interface 603.

Avantageusement, lorsque ledit corps 601 est éclairé par de la lumière produisant des reflets sur ladite interface, ledit système est tel que lesdits moyens pour réaliser au moins une image vidéo de ladite interface et de ladite zone comprennent un filtre polarisant 611 éliminant au moins en partie les reflets de la lumière sur ladite interface. C'est en particulier le cas d'une piscine reflétant les rayons du soleil ou ceux d'un éclairage artificiel.

De préférence, ledit système peut être mis en oeuvre selon deux variantes de réalisation qui ne sont pas exclusives l'une de l'autre. La première sera ci-après désignée la variante de réalisation de la branche 1. La seconde sera ci-après désignée la variante de réalisation de la branche 2.

### Branche 1

Dans le cas de cette variante de réalisation, lesdits moyens de traitement informatique 700 des données destiné à discriminer les données correspondant à l'image vidéo d'un corps réel de celles qui correspondent à l'image vidéo apparente générée par ladite interface, comprennent des comprennent des moyens de calcul 701, 702, notamment un processeur 701 et une mémoire 702. Les moyens de calcul 701, 702 permettent de :
- générer des calottes,
- associer à chaque calotte des caractéristiques,
- déduire la présence d'un corps si les caractéristiques dépassent un seuil SC prédéterminé.

Dans le cas où ledit système est plus particulièrement destiné à discriminer entre un corps stationnaire (un nageur en difficulté) et un corps en mouvement (un nageur s'ébattant dans un bassin), ledit système comprend des moyens d'itération 703, associés à une horloge 704, pour itérer à intervalles de temps déterminés le processus de déduction de la présence d'un corps ci-dessus décrit. Dans ce cas, lesdits moyens de calcul 701, 702 comprennent des totalisateurs 705 pour calculer le nombre de fois où le corps est détecté pendant une période de temps déterminée T1. Lesdits moyens de calcul 701, 702 comprennent en outre des discriminateurs 706 pour discriminer, en un point de ladite zone, entre les corps qui sont présents un nombre de fois supérieur à un seuil déterminé S1 et les corps qui sont présents un nombre de fois inférieur audit seuil déterminé S1. Dans le premier cas lesdits corps sont ci-après désignés les corps stationnaires, dans le deuxième cas lesdits corps sont ci-après désignés les corps en mouvement.

Selon la variante de réalisation de la branche 1, dans le cas où le système est plus particulièrement destiné à déterminer si, par rapport à un desdits points d'observation, un corps stationnaire est situé :
- de l'autre côté de l'interface (par exemple un nageur en difficulté sous l'eau),
- du même côté de l'interface (par exemple un baigneur debout dans un bassin peu profond),
- à l'interface (par exemple un nageur faisant la planche),
lesdits moyens de calcul comprennent en outre des moyens 707 pour calculer la fluctuation temporelle moyenne des niveaux de gris desdites images vidéo dudit corps. A cet effet, les images vidéo sont prises à intervalles de temps déterminés à partir dudit point d'observation. Trois cas sont à considérer :

### Cas où le corps (le nageur) est situé de l'autre côté de l'interface (sous l'eau)

Dans le cas où le corps est situé de l'autre côté de l'interface, lesdits moyens de calcul comprennent en outre des moyens de détection 708a pour détecter, en un point de ladite zone, les corps qui ont une fluctuation temporelle moyenne des niveaux de gris supérieure à un seuil déterminé S3. Lesdits corps sont ci-après désignés les corps situés de l'autre côté de l'interface.

### Cas où le corps (le nageur) est situé du même côté de l'interface (en position debout dans un bassin peu profond)

Dans le cas où le corps est situé du même côté de l'interface, lesdits moyens de calcul comprennent en outre des moyens de détection 708b pour détecter, en un point de ladite zone, les corps qui ont une fluctuation temporelle moyenne des niveaux de gris inférieure à un seuil déterminé S4. Ledit seuil S4 étant inférieur au seuil S3. Lesdits corps sont ci -après désignés les corps situés du même côté de l'interface.

### Cas où le corps est situé à l'interface (cas où le nageur nage à la surface)

Dans le cas où le corps est situé à l'interface, lesdits moyens de calcul comprennent en outre des moyens de détection 708c pour détecter, en un point de ladite zone, les corps qui ont une fluctuation temporelle moyenne des niveaux de gris comprise entre le seuil S3 et le seuil S4. Lesdits corps sont ci-après désignés les corps situés à l'interface.

Selon une autre variante de réalisation, dans le cas des corps stationnaires, lorsque ledit système est plus particulièrement destiné à déterminer si, par rapport à un desdits points d'observation, un corps stationnaire est situé :
- de l'autre côté de l'interface (par exemple un nageur en difficulté sous l'eau),
- du même côté de l'interface (par exemple un baigneur debout dans un bassin peu profond),
- à l'interface (par exemple un nageur faisant la planche),
ledit système comprend en outre des moyens d'analyse stéréoscopique 709 du corps stationnaire par rapport à ladite interface. A cet effet, les images vidéo sont prises à intervalles de temps déterminés à partir dudit point d'observation. De tels moyens d'analyse stéréoscopiques ont été décri ts dans la demande de brevet dans la demande française n° 99 16124 déposée le 21 décembre 1999 et publiée le 22 juin 2001 sous le numéro FR2802653.

De préférence, ledit système mettant en oeuvre l'une ou l'autre des deux méthodes précédentes comporte en outre des moyens d'émission 716 pour émettre un signal d'alerte 711 selon les critères de détection ci-dessus décrits, notamment en présence d'un corps stationnaire situé sous la surface d'une interface eau/air. Par exemple, dans le cas de l'application du système selon l'invention à la surveillance d'une piscine, le système déclenche une sirène ou un pager alertant les surveillants de baignade lorsqu'un nageur reste immobilisé trop longtemps sous la surface de l'eau.

Dans le cas de la variante de réalisation faisant l'objet de la première branche, lorsque le système selon l'invention est plus particulièrement destiné à détecter l'apparition de nouveaux corps dans ladite zone, ledit système comprend des moyens d'itération 703 associés à une horloge 704 pour itérer à intervalles de temps déterminés le processus de déduction de la présence d'un corps ci-dessus décrit.

Lesdits moyens de calcul 701, 702 comprennent en outre des moyens pour calculer le nombre de fois où le corps est détecté pendant une période de temps déterminée T2. Ladite période de temps T2 est choisie supérieure à la durée des phénomènes liés aux corps que l'on détecte. Lesdits moyens de calcul comprennent en outre des moyens de discrimination 712 pour discriminer, en un point de ladite zone, entre les corps qui sont présents un nombre de fois supérieur à un seuil déterminé S2 et les corps qui sont présents un nombre de fois inférieur audit seuil déterminé S2. Lesdits corps sont respectivement ci-après désignés les corps habituellement présent et les corps nouveaux.

Avantageusement, lorsque le système est plus particulièrement destiné à détecter les corps nouveaux et stationnaires, la période de temps T1 est choisie inférieure à la période de temps T2.

Dans le cas de la variante de réalisation selon la première branche, lorsque ledit système est plus particulièrement destiné à fournir une estimation statistique du temps d'occupation de ladite zone Z par au moins un corps pendant une période de temps déterminée T, ledit système comprend des moyens de parti tion 713 pour effectuer une partition de ladite zone en zones élémentaires Δz. Dans ce cas, ledit système comprend en outre des moyens d'itération 703 associés à une horloge 704 pour itérer dans une zone élémentaire Δz, pendant des intervalles de temps élémentaires Δt, le processus de déduction de la présence d'un corps. Dans ce cas également, lesdits moyens de calcul 701, 702 comprennent en outre des moyens pour calculer le nombre de fois Δt/T où un corps est présent dans une zone élémentaire Δz pendant la période de temps déterminée T.

Dans le cas de la variante de réalisation selon la première branche, lesdits moyens de calcul 701, 702 comprennent en outre des moyens pour calculer la trajectoire des corps dont la présence a été détectée. Dans ce cas, lorsque le système est plus particulièrement destiné à détecter la disparition d'un corps dans une zone déterminée, notamment la disparition d'un nageur en bordure de mer ou la sortie d'un nageur de la zone autorisée d'une piscine à vagues, ledit système comprend en outre des moyens de détection pour détecter l'arrêt d'une trajectoire à la frontière de ladite zone, notamment en dehors des limites de surveillance.

### Branche 2

On va maintenant décrire une seconde variante de réalisation (dénommée la second branche). Cette seconde variante de réalisation qui n'est pas exclusive de la première peut être mise en oeuvre en utilisant les mêmes organes. Ils portent les mêmes références numériques.

Dans le cas de la variante de réalisation de la branche 2, lorsque ledit système selon l'invention est plus particulièrement destiné à détecter un corps stationnaire (par exemple un nageur en difficulté dans une piscine) à proximité de ladite interface, lesdits moyens de traitement informatique 700 pour discriminer les données correspondant à l'image vidéo d'un corps réel 601 de celles correspondant à l'image vidéo apparente générée par ladite interface 602, comprennent des moyens de calcul 701, 702 présentant les traits techniques ci-après décrits. Lesdits moyens de calcul 701, 102 comprennent des moyens d'association 714 pour associer des primitives à chaque pixel de ladite image vidéo. Lesdits moyens de calcul comprennent en outre des moyens de validation pour valider une primitive comme stationnaire si pendant n intervalles de temps successifs Δt composant une période de temps déterminée T5, ladite primitive est réalisée au moins un nombre de fois supérieur à un seuil S5 déterminé. Lesdits moyens de calcul comprennent en outre des moyens pour calculer et rechercher les images virtuelles de corps stationnaires.

Dans le cas de la variante de réalisation faisant l'objet de la deuxième branche, lorsque ledit système est plus particulièrement destiné à détecter un corps stationnaire nouveau à proximité de ladite interface, ledit système comprend des moyens d'itération 703, associés à une horloge 704, pour itérer, à intervalles de temps successifs Δt composant une période de temps déterminée T6, le processus de détection de la présence d'un corps stationnaire. Dans ce cas, lesdits moyens de calcul comprennent des moyens pour calculer le nombre de fois où un corps est détecté comme étant stationnaire pendant ladite période de temps déterminée T6. Ladite période de temps T6 est choisie supérieure à la durée des phénomènes liés au corps que l'on détecte. Ladite période de temps T6 est inférieure à ladite période de temps T5. Dans ce cas également, lesdits moyens de calcul comprennent des moyens de discrimination 712 pour discriminer, en un point de ladite zone, entre un corps stationnaire qui est présent un nombre de fois supérieur à un seuil déterminé S6 et un corps qui est présent un nombre de fois inférieur audit seuil déterminé S6. Ledit corps est ci-après désigné le nouveau corps stationnaire. Par exemple, dans le cas d'une piscine, il peut s'agir d'un nageur en difficulté qui vient de s'immobiliser.

Dans le cas de la variante de réalisation faisant l'objet de la deuxième branche, lorsque ledit système est plus particulièrement destiné à déterminer si, par rapport à un desdits points d'observation, un corps stationnaire nouveau est situé :
- de l'autre côté de l'interface (par exemple un nageur en difficulté sous l'eau),
- du même côté de l'interface (par exemple un baigneur debout dans un bassin peu profond),
- à l'interface (par exemple un nageur faisant la planche),
ledit système comprend en outre des moyens d'itération 703, associés à une horloge 704, pour itérer, à intervalles de temps successifs Δt composant une période de temps de temps déterminée T7, le processus de détection de la présence d'un corps stationnaire. A cet effet, les images vidéo sont prises à intervalles de temps déterminés à partir dudit point d'observation. Dans ce cas également, lesdits moyens de calcul 701, 702 comprennent en outre des moyens pour calculer le nombre de fois où un corps est détecté comme étant stationnaire et nouveau pendant ladite période de temps déterminée T7. Ladite période de temps T7 est choisie supérieure à la durée des phénomènes que l'on observe. Ladite période de temps T7 est inférieure à ladite période de temps T6. Trois cas sont à considérer.

### Cas où le corps est situé de l'autre côté de l'interface (sous l'eau)

Dans le cas où le corps est situé de l'autre côté de l'interface, lesdits moyens de calcul comprennent des moyens de détection 708a pour détecter, en un point de ladite zone, entre un corps qui est présent un nombre de fois supérieur à un seuil déterminé S7 et un corps qui est présent un nombre de fois inférieur audit seuil déterminé S7. Ledit corps est ci-après désigné le nouveau corps stationnaire situé de l'autre côté de l'interface.

### Cas où le corps est situé du même côté de l'interface (par exemple nageur en position debout dans un bassin peu profond)

Dans le cas où le corps est situé du même côté de l'interface, lesdits moyens de calcul comprennent en outre des moyens de détection 708b pour détecter, en un point de ladite zone, entre un corps qui est présent un nombre de fois supérieur à un seuil déterminé S8 et un corps qui est présent un nombre de fois inférieur audit seuil déterminé S8. Ledit seuil S8 est inférieur au seuil S7. Ledit corps est ci-après désigné le nouveau corps stationnaire situé du même côté de l'interface.

### Cas où le corps est situé à l'interface (par exemple nageur faisant la planche)

Dans le cas où le corps est situé à l'interface, lesdits moyens de calcul comprennent des moyens de détection 708c pour détecter, en un point de ladite zone, un corps qui est présent un nombre de fois compris entre le seuil S7 et le seuil S8. Lesdits corps sont ci-après désignés les corps situés à l'interface.

Dans ces trois différents cas, le système comporte en outre des moyens d'émission 716 pour émettre un signal d'alerte 711 selon les critères de détection appliqués dans l'un ou l'autre de ces cas, notamment en présence d'un corps stationnaire situé sous la surface d'une interface eau/air.

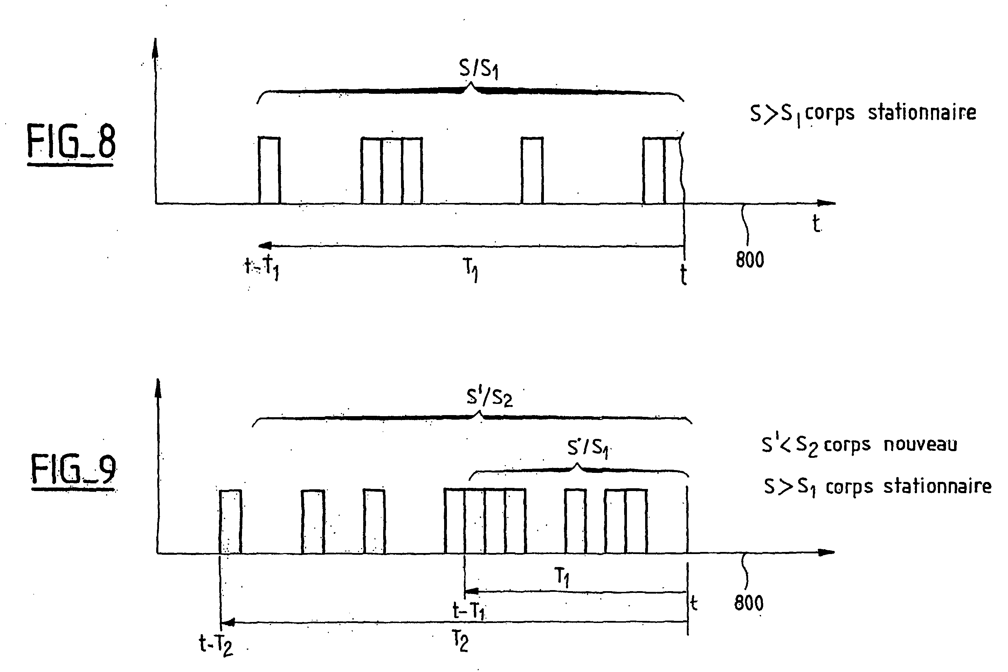

On a représenté sur les figures 8 et 9, l'historique des événements observés par la caméra 606 en symbolisant, sur l'axe des temps 800, par des rectangles hachurés les intervalles de temps élémentaires où un corps a été détecté.

Dans le cas de la figure 8, l'historique des événements a été dressé pendant la période de temps [t-T1, t]. A l'instant t , on connaît le nombre de fois S où le corps a été détecté. L'algorithme de décision est le suivant :
- Si S est supérieur à un seuil S1, on en déduit que le corps est stationnaire ;
- Si S est inférieur au seuil S1 et si l'on constate que le corps est présent à l'instant t, le corps observé est en mouvement.

Dans le cas de la figure 9, l'historique des événements a été dressé pendant la période de temps [t-T2, t] ; T2 étant supérieur à T1. A l'instant t on connaît le nombre de fois S' où le corps est détecté. L'algorithme de décision est le suivant :
- Si S' est supérieur à S2, le corps n'est pas nouveau.
- Si S' n'est pas supérieur à S2, le corps est nouveau.
- Si S est supérieur à S1 le corps est nouveau et stationnaire.

## Revendications

1. Procédé pour détecter un corps (601) dans une zone (603) située à proximité d'une interface (602) entre deux milieux liquides (604) et/ou gazeux (605) ayant des indices de réfraction différents, notamment du type eau/air ; "à proximité" désignant également "à l'interface (602)" ; ledit procédé comprenant les étapes suivantes :
- l'étape de réaliser au moins une image vidéo de ladite interface (602) et de ladite zone (603), à partir d'au moins un point d'observation (607), chacun des points d'observation étant situé d'un côté de ladite interface (602) ;
- l'étape de produire des signaux électriques (608) représentatifs de chaque image vidéo ;
- l'étape de numériser les signaux électriques (608) de manière à produire des données correspondant à chaque image vidéo ;
- l'étape de traiter lesdites données en discriminant les données correspondant à l'image vidéo d'un corps (601) réel de celles correspondant à une image vidéo apparente générée par ladite interface (602),
ledit procédé étant tel que, pour traiter lesdites données en discriminant les données correspondant à ladite image vidéo d'un corps réel (601) de celles correspondant à ladite image vidéo apparente générée par ladite interface (602), on génère des calottes et/ou on associe à chaque pixel de ladite image vidéo des primitives,
ledit procédé étant tel que, lorsque des calottes sont générées, l'étape de traiter lesdites données comprend les étapes suivantes :
- l'étape d'associer à chaque calotte des caractéristiques ;
- l'étape de déduire la présence d'un corps (601) si les caractéristiques dépassent un seuil SC prédéterminé.

2. Procédé selon la revendication 1 ; ledit corps (601) étant éclairé par de la lumière produisant des reflets sur ladite interface (602) ;
ledit procédé comprenant l'étape suivante lorsque des calottes sont générées :
- l'étape de réaliser au moins une image vidéo de ladite interface (602) et de ladite zone (603), en mettant en oeuvre un filtre polarisant (611) éliminant au moins en partie les reflets de la lumière sur ladite interface (602).

3. Procédé selon la revendication 1 ou 2 plus particulièrement destiné à discriminer entre un corps (601) stationnaire et un corps (601) en mouvement ;
ledit procédé comprenant en outre les étapes suivantes lorsque des calottes sont générées :
- l'étape d'itérer à intervalles de temps déterminés le processus de déduction de la présence d'un corps (601) faisant l'objet de la revendication 1 ;
- l'étape de calculer le nombre de fois où le corps (601) est détecté pendant une période de temps déterminée T1 ;
- l'étape de discriminer, en un point de ladite zone (603), entre les corps (601) qui sont présents un nombre de fois supérieur à un seuil déterminé S1, ces corps étant ci-après désignés les corps stationnaires, et les corps (601) qui sont présents un nombre de fois inférieur audit seuil déterminé S1, ces corps étant ci-après désignés les corps en mouvement.

4. Procédé selon la revendication 3 plus particulièrement destiné à déterminer si, par rapport à un desdits points d'observation, un corps (601) stationnaire est situé, :
- de l'autre côté de l'interface (602),
- du même côté de l'interface (602),
- à l'interface (602) ;
les images vidéo étant prises à intervalles de temps déterminés à partir dudit point d'observation (607) ;
ledit procédé comprenant en outre les étapes suivantes :
- l'étape de calculer une fluctuation temporelle (707) moyenne des niveaux de gris desdites images vidéo dudit corps (601),
Cas où le corps (601) est situé de l'autre côté de l'interface (602) :
- l'étape de détecter, en un point de ladite zone (603), les corps (601) qui ont une fluctuation temporelle moyenne des niveaux de gris supérieure à un seuil déterminé S3 (lesdits corps étant ci-après désignés les corps situés de l'autre côté de l'interface (602))
Cas où le corps (601) est situé du même côté de l'interface (602) :
- l'étape de détecter, en un point de ladite zone (603), les corps (601) qui ont une fluctuation temporelle moyenne des niveaux de gris inférieure à un seuil déterminé S4, ces corps étant ci-après désignés les corps situés du même côté de l'interface (602), ledit seuil S4 étant inférieur au seuil S3
Cas où le corps (601) est situé à l'interface (602) :
- l'étape de détecter, en un point de ladite zone (603), les corps (601) qui ont une fluctuation temporelle moyenne des niveaux de gris comprise entre le seuil S3 et le seuil S4, ces corps étant ci-après désignés les corps situés à l'interface (602).

5. Procédé selon la revendication 3 plus particulièrement destiné à déterminer si, par rapport à un desdits points d'observation, un corps (601) stationnaire est situé :
- de l'autre côté de l'interface (602),
- du même côté de l'interface (602),
- à l'interface (602),
les images vidéo étant prises à intervalles de temps déterminés à partir dudit point d'observation (607) ;
ledit procédé comprenant en outre l'étape suivante :
- l'étape de procéder à une analyse stéréoscopique du corps (601) stationnaire par rapport à ladite interface (602).

6. Procédé selon l'une des revendications 4 ou 5 comportant en outre l'étape suivante :
- l'étape d'émettre un signal d'alerte (711) selon les critères de détection appliqués dans l'un ou l'autre des cas faisant l'objet de la revendication 4 ou de la revendication 5, notamment en présence d'un corps (601) stationnaire situé sous la surface d'une interface (602) eau/air.

7. Procédé selon l'une quelconque des revendications 1 à 6 plus particulièrement destiné à détecter l'apparition de nouveaux corps (601) dans ladite zone (603) ;
ledit procédé comprenant en outre, lorsque des calottes sont générées :
- l'étape d'itérer à intervalles de temps déterminés le processus de déduction de la présence d'un corps (601) faisant l'objet de la revendication 1 ;
- l'étape de calculer le nombre de fois où le corps (601) est détecté pendant une période de temps déterminée T2 ; ladite période de temps T2 étant choisie supérieure à la durée des phénomènes liés aux corps (601) que l'on détecte ;
- l'étape de discriminer, en un point de ladite zone (603), entre les corps (601) qui sont présents un nombre de fois supérieur à un seuil déterminé S2, ces corps étant ci-après désignés les corps habituellement présents, et les corps (601) qui sont présents un nombre de fois inférieur audit seuil déterminé S2, ces corps étant ci-après désignés les corps nouveaux.

8. Procédé selon les revendications 3 et 7 prises en combinaison plus particulièrement destiné à détecter les corps (601) nouveaux et stationnaires ; ledit procédé étant tel que la période de temps T1 est choisie inférieure à la période de temps T2.

9. Procédé selon l'une quelconque des revendications 1 à 8 plus particulièrement destiné à fournir une estimation , statistique du temps d'occupation de ladite zone (603) Z par au moins un corps (601) pendant une période de temps déterminée T ;
ledit procédé comprenant les étapes suivantes lorsque des calottes sont générées :
- l'étape d'effectuer une partition de ladite zone (603) en zones élémentaires Δz,
- l'étape de mettre en oeuvre dans une zone (603) élémentaire Δz, pendant des intervalles de temps élémentaires Δt le processus de déduction de la présence d'un corps (601) faisant l'objet de la revendication 1 ;
- l'étape de calculer le nombre de fois Δt/T où un corps (601) est présent dans une zone (603) élémentaire Δz pendant la période de temps déterminée T.

10. Procédé selon l'un quelconque des revendication 1 à 9 ; ledit procédé comprenant en outre l'étape suivante lorsque des calottes sont générées :
- l'étape de calculer la trajectoire des corps (601) dont la présence a été détectée.

11. Procédé selon la revendication 10 plus particulièrement destiné à détecter la disparition d'un corps (601) dans une zone (603) déterminée, notamment la disparition d'un nageur en bordure de mer ;
ledit procédé comprenant les étapes suivantes :
- l'étape de détecter l'arrêt d'une trajectoire à la frontière de ladite zone (603), notamment en dehors des limites de surveillance.

12. Procédé pour détecter un corps (601) dans une zone (603) située à proximité d'une interface (602) entre deux milieux liquides (604) et/ou gazeux (605) ayant des indices de réfraction différents, notamment du type eau/air ; "à proximité" désignant également "à l'interface (602)" ; ledit procédé comprenant les étapes suivantes :
- l'étape de réaliser au moins une image vidéo de ladite interface (602) et de ladite zone (603), à partir d'au moins un point d'observation (607), chacun des points d'observation étant situé d'un côté de ladite interface (602) ;
- l'étape de produire des signaux électriques (608) représentatifs de chaque image vidéo ;
- l'étape de numériser les signaux électriques (608) de manière à produire des données correspondant à chaque image vidéo ;
- l'étape de traiter lesdites données en discriminant les données correspondant à l'image vidéo d'un corps (601) réel de celles correspondant à une image vidéo apparente générée par ladite interface (602),
ledit procédé étant tel que, pour traiter lesdites données en discriminant les données correspondant à ladite image vidéo d'un corps réel (601) de celles correspondant à ladite image vidéo apparente générée par ladite interface (602), on génère des calottes et/ou on associe à chaque pixel de ladite image vidéo des primitives,
ledit procédé étant particulièrement destiné à détecter un corps (601) stationnaire à proximité de ladite interface (602) ; ledit procédé étant tel que l'étape de traiter lesdites données comprend les étapes suivantes lorsque des primitives sont associées à chaque pixel :
- l'étape de valider une primitive comme stationnaire si pendant n intervalles de temps successifs Δt composant une période de temps de temps déterminée T5, ladite primitive est réalisée au moins un nombre de fois supérieur à un seuil S5 déterminé.
- l'étape de calculer et de rechercher des images virtuelles de corps (601) stationnaires.

13. Procédé selon la revendication 12 plus particulièrement destiné à détecter un corps (601) stationnaire nouveau à proximité de ladite interface (602) ;
ledit procédé comprenant les étapes suivantes lorsque des primitives sont associées à chaque pixel :
- l'étape d'itérer, à intervalles de temps successifs Δt composant une période de temps de temps déterminée T6, le processus de détection de la présence d'un corps (601) stationnaire faisant l'objet de la revendication 12,
- l'étape de calculer le nombre de fois où un corps (601) est détecté comme étant stationnaire pendant ladite période de temps déterminée T6 ;
- l'étape de discriminer, en un point de ladite zone (603), entre un corps (601) stationnaire qui est présent un nombre de fois supérieur à un seuil déterminé S6 et un corps (601) qui est présent un nombre de fois inférieur audit seuil déterminé S6, ce corps étant ci-après désigné le nouveau corps stationnaire.

14. Procédé selon la revendication 13 plus particulièrement destiné à déterminer si, par rapport à un desdits points d'observation, un corps (601) stationnaire nouveau est situé :
- de l'autre côté de l'interface (602),
- du même côté de l'interface (602),
- à l'interface (602) ;
les images vidéo étant prises à intervalles de temps déterminés à partir dudit point d'observation (607) ;
ledit procédé comprenant les étapes suivantes lorsque des primitives sont associées à chaque pixel :
- l'étape d'itérer, à intervalles de temps successifs Δt composant une période de temps déterminée T7, le processus de détection de la présence d'un corps (601) stationnaire faisant l'objet de la revendication 12,
- l'étape de calculer le nombre de fois où un corps (601) est détecté comme étant stationnaire et nouveau pendant ladite période de temps déterminée T7 ; ladite période de temps T7 étant choisie supérieure à la durée des phénomènes que l'on observe ; ladite période de temps T7 étant inférieure à ladite période de temps T6,
Cas où le corps (601) est situé de l'autre côté de l'interface (602) :
- l'étape de détecter, en un point de ladite zone (603), entre un corps (601) qui est présent un nombre de fois supérieur à un seuil déterminé S7 et un corps (601) qui est présent un nombre de fois inférieur audit seuil déterminé S7, ce corps étant ci-après désigné le nouveau corps stationnaire situé de l'autre côté de l'interface (602) ;
Cas où le corps (601) est situé du même côté de l'interface (602) :
- l'étape de détecter, en un point de ladite zone (603), entre un corps (601) qui est présent un nombre de fois supérieur à un seuil déterminé S8 et un corps (601) qui est présent un nombre de fois inférieur audit seuil déterminé S8 ce corps étant ci-après désigné le nouveau corps stationnaire situé du même côté de l'interface (602) ; ledit seuil S8 étant inférieur au seuil S7 ;
Cas où le corps (601) est situé à l'interface (602) :
- l'étape de détecter, en un point de ladite zone (603), un corps (601) qui est présent un nombre de fois compris entre le seuil S7 et le seuil S8
ce corps étant ci-après désigné le corps situé à l'interface (602).

15. Procédé selon la revendication 14 comportant en outre l'étape d'émettre un signal d'alerte (711) selon les critères de détection appliqués dans l'un ou l'autre des cas faisant l'objet de la revendication 14, notamment en présence d'un corps (601) stationnaire situé sous la surface d'une interface (602) eau/air.

16. Système pour détecter un corps (601) dans une zone (603) située à proximité d'une interface (602) entre deux milieux liquides (604) et/ou gazeux (605) ayant des indices de réfraction différents, notamment du type eau/air ; "à proximité" désignant également "à l'interface (602)" ; ledit système comprenant :
- des moyens, notamment une caméra vidéo (606), pour réaliser au moins une image vidéo de ladite interface (602) et de ladite zone (603), à partir d'au moins un point d'observation (607), chacun des points d'observation étant situé d'un côté de ladite interface (602) ;
- des moyens de conversion numériques (609) pour produire des données numériques à partir des signaux électriques (608) représentatifs de chaque image vidéo ;
- des moyens de traitement informatique (700) pour discriminer les données correspondant à l'image vidéo d'un corps (601) réel de celles correspondant à une image vidéo apparente générée par ladite interface (602) ; lesdits moyens de traitement informatique pour discriminer les données correspondant à l'image vidéo d'un corps (601) réel de celles correspondant à l'image vidéo apparente générée par ladite interface (602) comprennent des moyens de calcul (702) (701) pour :
- générer des calottes, et/ou
- associer des primitives à chaque pixel de ladite image vidéo;
ledit système étant tel que lesdits moyens de traitement informatique (700) comprennent des moyens de calcul (702) (701) pour, lorsque des calottes sont générées :
- associer à chaque calotte des caractéristiques ;
- déduire la présence d'un corps (601) si les caractéristiques dépassent un seuil SC prédéterminé.

17. Système selon la revendication 16 ; ledit corps (601) étant éclairé par de la lumière produisant des reflets sur ladite interface (602) ; ledit système étant tel que, lorsque des calottes sont générées, lesdits moyens pour réaliser au moins une image vidéo de ladite interface (602) et de ladite zone (603) comprennent- un filtre polarisant (611) éliminant au moins en partie les reflets de la lumière sur ladite interface (602).

18. Système selon la revendication 16 ou 17 plus particulièrement destiné à discriminer entre un corps (601) stationnaire et un corps (601) en mouvement ;
ledit système comprenant en outre :
- des moyens d'itération (703) pour itérer à intervalles de temps déterminés le processus de déduction de la présence d'un corps (601) faisant l'objet de la revendication 16 ;
lesdits moyens de calcul (702) (701) comprenant, lorsque des calottes sont générées :
- des totalisateurs (705) pour calculer le nombre de fois où le corps (601) est détecté pendant une période de temps déterminée T1 ;
- des discriminateurs (706) pour discriminer, en un point de ladite zone (603), entre les corps (601) qui sont présents un nombre de fois supérieur à un seuil déterminé S1, ces corps (601) étant ci-après désignés les corps (601) stationnaires, et les corps (601) qui sont présents un nombre de fois inférieur audit seuil déterminé S1, ces corps (601) étant ci-après désignés les corps (601) en mouvement.

19. Système selon la revendication 18 plus particulièrement destiné à déterminer si, par rapport à un desdits points d'observation, un corps (601) stationnaire est situé :
- de l'autre côté de l'interface (602),
- du même côté de l'interface (602),
- à l'interface (602) ;
les images vidéo étant prises à intervalles de temps déterminés à partir dudit point d'observation (607) ;
lesdits moyens de calcul (702) (701) comprenant en outre :
- des moyens pour calculer la fluctuation temporelle (707) moyenne des niveaux de gris desdites images vidéo dudit corps (601),
Cas où le corps (601) est situé de l'autre côté de l'interface (602) :
lesdits moyens de calcul (702) (701) comprenant en outre :
- des moyens de détection (708a) S3 pour détecter, en un point de ladite zone (603), les corps (601) qui ont une fluctuation temporelle moyenne des niveaux de gris supérieure à un seuil déterminé S3, ces corps (601) étant ci-après désignés les corps (601), situés de l'autre côté de l'interface (602)),
Cas où le corps (601) est situé du même côté de l'interface (602) :
- des moyens de détection (708b) S4 pour détecter, en un point de ladite zone (603), les corps (601) qui ont une fluctuation temporelle moyenne des niveaux de gris inférieure à un seuil déterminé S4, ces corps (601) étant ci-après désignés les corps (601) situés du même côté de l'interface (602), ledit seuil S4 étant inférieur au seuil S3.
Cas où le corps (601) est situé à l'interface (602) :
- des moyens de détection (708c) S3/S4 pour détecter, en un point de ladite zone (603), les corps (601) qui ont une fluctuation temporelle moyenne des niveaux de gris comprise entre le seuil S3 et le seuil S4, ces corps (601) étant ci-après désignés les corps (601) situés à l'interface (602).

20. Système selon la revendication 18 plus particulièrement destiné à déterminer si, par rapport à un desdits points d'observation, un corps (601) stationnaire est situé :
- de l'autre côté de l'interface (602),
- du même côté de l'interface (602),
- à l'interface (602) ;
les images vidéo étant prises à intervalles de temps déterminés à partir dudit point d'observation (607) ;
ledit système comprenant en outre:
- des moyens d'analyse stéréoscopique (709) du corps (601) stationnaire par rapport à ladite interface (602).

21. Système selon l'une des revendications 19 ou 20 comportant en outre :
- des moyens d'émission (716) pour émettre un signal d'alerte (711) selon les critères de détection appliqués dans l'un ou l'autre des cas faisant l'objet de la revendication 19 ou de la revendication 20, notamment en présence d'un corps (601) stationnaire situé sous la surface d'une interface (602) eau/air.

22. Système selon l'une quelconque des revendications 16 à 21 plus particulièrement destiné à détecter l'apparition de nouveaux corps (601) dans ladite zone (603) ;
ledit système comprenant en outre, lorsque des calottes sont générées :
- des moyens d'itération (703) pour itérer à intervalles de temps déterminés le processus de déduction de la présence d'un corps (601) faisant l'objet de la revendication 16 ;
lesdits moyens de calcul (702) (701) comprenant en outre des moyens pour :
- calculer le nombre de fois où le corps (601) est détecté pendant une période de temps déterminée T2 ; ladite période de temps T2 étant choisie supérieure à la durée des phénomènes liés aux corps (601) que l'on détecte ;
- discriminer, en un point de ladite zone (603), entre les corps (601) qui sont présents un nombre de fois supérieur à un seuil déterminé S2, ces corps (601) étant ci-après désignés les corps (601) habituellement présents, et les corps (601) qui sont présents un nombre de fois inférieur audit seuil déterminé S2, ces corps (601) étant ci-après désignés les corps (601) nouveaux.

23. Système selon les revendications 18 et 22 prises en combinaison plus particulièrement destiné à détecter les corps (601) nouveaux et stationnaires ; ledit système étant tel que la période de temps T1 est choisie inférieure à la période de temps T2.

24. Système selon l'une quelconque des revendications 16 à 23 plus particulièrement destiné à fournir une estimation statistique du temps d'occupation de ladite zone (603) Z par au moins un corps (601) pendant une période de temps déterminée T ;
ledit système comprenant, lorsque des calottes sont générées :
- des moyens de partition pour effectuer une partition de ladite zone (603) en zones élémentaires Δz,
- des moyens d'itération (703) pour itérer dans une zone (603) élémentaire Δz, pendant des intervalles de temps élémentaires Δt, le processus de déduction de la présence d'un corps (601) faisant l'objet de la revendication 21 ;
lesdits moyens de calcul (702) (701) comprenant en outre des moyens pour calculer le nombre de fois Δt/T où un corps (601) est présent dans une zone (603) élémentaire Δz pendant la période de temps déterminée T.

25. Système selon l'un quelconque des revendication 16 à 24 ; lesdits moyens de calcul (702) (701) comprenant en outre des moyens pour calculer la trajectoire des corps (601) dont la présence a été détectée.

26. Système selon la revendication 25 plus particulièrement destiné à détecter la disparition d'un corps (601) dans une zone (603) déterminée, notamment la disparition d'un nageur en bordure de mer ;
ledit système comprenant en outre :
- des moyens de détection (708) pour détecter l'arrêt d'une trajectoire à la frontière de ladite zone (603), notamment en dehors des limites de surveillance.

27. Système pour détecter un corps (601) dans une zone (603) située à proximité d'une interface (602) entre deux milieux liquides (604) et/ou gazeux (605) ayant des indices de réfraction différents, notamment du type eau/air ; "à proximité" désignant également "à l'interface (602)" ; ledit système comprenant :
- des moyens, notamment une caméra vidéo (606), pour réaliser au moins une image vidéo de ladite interface (602) et de ladite zone (603), à partir d'au moins un point d'observation (607), chacun des points d'observation étant situé d'un côté de ladite interface (602) ;
- des moyens de conversion numériques (609) pour produire des données numériques à partir des signaux électriques (608) représentatifs de chaque image vidéo ;
- des moyens de traitement informatique (700) pour discriminer les données correspondant à l'image vidéo d'un corps (601) réel de celles correspondant à une image vidéo apparente générée par ladite interface (602) ;
lesdits moyens de traitement informatique pour discriminer les données correspondant à l'image vidéo d'un corps (601) réel de celles correspondant à l'image vidéo apparente générée par ladite interface (602) comprennent des moyens de calcul (702) (701) pour :
- générer des calottes, et/ou
- associer des primitives à chaque pixel de ladite image vidéo ; plus particulièrement destiné à détecter un corps (601) stationnaire à proximité de ladite interface (602) ;
ledit système étant tel que lesdits moyens de traitement informatique (700) pour discriminer les données correspondant à l'image vidéo d'un corps (601) réel de celles correspondant à l'image vidéo apparente générée par ladite interface (602), comprennent des moyens de calcul (702) (701) pour, lorsque des primitives sont associées à chaque pixel :
- valider une primitive comme stationnaire si pendant n intervalles de temps successifs Δt composant une période de temps déterminée T5, ladite primitive est réalisée au moins un nombre de fois supérieur à un seuil S5 déterminé,
- calculer et rechercher les images virtuelles de corps (601) stationnaires.

28. Système selon la revendication 27 plus particulièrement destiné à détecter un corps (601) stationnaire nouveau à proximité de ladite interface (602) ;
ledit système comprenant, lorsque des primitives sont associées à chaque pixel :
- des moyens d'itération (703) pour itérer, à intervalles de temps successifs Δt composant une période de temps de temps déterminée T6, le processus de détection de la présence d'un corps (601) stationnaire faisant l'objet de la revendication 27,
lesdits moyens de calcul (702) (701) comprenant :
- des moyens pour calculer le nombre de fois où un corps (601) est détecté comme étant stationnaire pendant ladite période de temps déterminée T6 ;
- des moyens de discrimination pour discriminer, en un point de ladite zone (603), entre un corps (601) stationnaire qui est présent un nombre de fois supérieur à un seuil déterminé S6 et un corps (601) qui est présents un nombre de fois inférieur audit seuil déterminé S6, ce corps (601) étant ci-après désigné le nouveau corps (601) stationnaire.

29. Système selon la revendication 28 plus particulièrement destiné à déterminer si, par rapport à un desdits points d'observation, un corps (601) stationnaire nouveau est situé :
- de l'autre côté de l'interface (602),
- du même côté de l'interface (602),
- à l'interface (602) ;
les images vidéo étant prises à intervalles de temps déterminés à partir dudit point d'observation (607) ;
ledit système comprenant en outre, lorsque des primitives sont associées à chaque pixel :
- des moyens d'itération (703) pour itérer, à intervalles de temps successifs Δt composant une période de temps de temps déterminée T7, le processus de détection de la présence d'un corps (601) stationnaire faisant l'objet de la revendication 31 ;
lesdits moyens de calcul (702) (701) comprenant en outre
- des moyens pour calculer le nombre de fois où un corps (601) est détecté comme étant stationnaire et nouveau pendant ladite période de temps déterminée T7 ; ladite période de temps T7 étant choisie supérieure à la durée des phénomènes que l'on observe ; ladite période de temps T7 étant inférieure à ladite période de temps T6,
Cas où le corps (601) est situé de l'autre côté de l'interface (602) :
- des moyens de détection (708a) pour détecter, en un point de ladite zone (603), entre un corps (601) qui est présent un nombre de fois supérieur à un seuil déterminé S7 et un corps (601) qui est présent un nombre de fois inférieur audit seuil déterminé S7 (ledit corps (601) étant ci-après désigné le nouveau corps (601) stationnaire situé de l'autre côté de l'interface (602)) ;
Cas où le corps (601) est situé du même côté de l'interface (602) :
- des moyens de détection (708b) pour détecter, en un point de ladite zone (603), entre un corps (601) qui est présent un nombre de fois supérieur à un seuil déterminé S8 et un corps (601) qui est présent un nombre de fois inférieur audit seuil déterminé S8 (ledit corps (601) étant ci-après désigné le nouveau corps (601) stationnaire situé du même côté de l'interface (602)) ; ledit seuil S8 étant inférieur au seuil S7 ;
Cas où le corps (601) est situé à l'interface (602) :
- des moyens de détection (708c) pour détecter, en un point de ladite zone (603), un corps (601) qui est présent un nombre de fois compris entre le seuil S7 et le seuil S8
ce corps (601) étant ci-après désigné le corps (601) situé à l'interface (602).

30. Système selon la revendication 29 ; ledit système comportant en outre des moyens d'émission (716) pour émettre un signal d'alerte (711) selon les critères de détection appliqués dans l'un ou l'autre des cas faisant l'objet de la revendication 29, notamment en présence d'un corps (601) stationnaire situé sous la surface d'une interface (602) eau/air.

31. Procédé selon l'une quelconque des revendications 1 à 15 plus particulièrement destiné à la surveillance d'une piscine.

32. Système selon l'une quelconque des revendications 16 à 30 plus particulièrement destiné à la surveillance d'une piscine.

33. Utilisation du procédé selon l'une quelconque des revendications 1 à 15 pour la surveillance d'une piscine.

34. Utilisation du système selon l'une quelconque des revendications 16 à 30 pour la surveillance d'une piscine.

## Patentansprüche

1. Verfahren zum Detektieren eines Körpers (601) in einer Zone (603), die nahe einer Grenzfläche (602) zwischen zwei flüssigen (604) und/oder gasförmigen (605) Medien mit unterschiedlicher Brechzahl, insbesondere vom Typ Wasser/Luft, liegt, wobei "nahe" auch "an der Grenzfläche (602)" bezeichnet und das Verfahren die folgenden Schritte umfasst:
- Erzeugung mindestens eines Videobildes der Grenzfläche (602) und der Zone (603), ausgehend von mindestens einem Beobachtungspunkt (607), wobei jeder der Beobachtungspunkte auf einer Seite der Grenzfläche (602) liegt;
- Erzeugung der elektrischen Signale (608) zur Darstellung jedes Videobildes;
- Digitalisierung der elektrischen Signale (608), um jedem Videobild entsprechende Daten zu erzeugen;
- Verarbeitung der Daten durch Unterscheidung der Daten, die dem Videobild eines realen Körpers (601) entsprechen, von denen, die einem anscheinenden Videobild entsprechen, das von der Grenzfläche (602) erzeugt wurde,
wobei bei dem Verfahren zur Verarbeitung der Daten durch Unterscheidung der Daten, die dem Videobild eines realen Körpers (601) entsprechen, von denen, die dem anscheinenden Videobild entsprechen, das von der Grenzfläche (602) erzeugt wurde, Kalotten erzeugt und/oder jedem Pixel des Videobildes Darstellungselemente zugeordnet werden,
und das Verfahren so ausgelegt ist, daß, wenn Kalotten erzeugt werden, der Schritt der Verarbeitung der Daten die folgenden Schritte umfasst:
- Zuweisen von Merkmalen für jede Kalotte;
- Deduktion der Gegenwart eines Körpers (601), wenn die Merkmale eine vorbestimmte Schwelle SC überschreiten.

2. Verfahren nach Anspruch 1, bei dem der Körper (601) mit Licht bestrahlt wird, das an der Grenzfläche (602) Reflexe erzeugt,
wobei das Verfahrenden folgenden Schritt umfasst, wenn Kalotten erzeugt werden:
- Erzeugung mindestens eines Videobildes der Grenzfläche (602) und der Zone (603), indem ein Polarisationsfilter (611) eingesetzt wird, der die Lichtreflexe auf der Grenzfläche (602) zumindest teilweise beseitigt.

3. Verfahren nach Anspruch 1 oder 2, das insbesondere zur Unterscheidung zwischen einem unbewegten Körper (601) und einem in Bewegung befindlichen Körper (601) dient,
wobei das Verfahren ferner die folgenden Schritte umfasst, wenn Kalotten erzeugt werden:
- Wiederholung des Verfahrens zur Deduktion der Gegenwart eines Körpers (601) nach Anspruch 1 in vorbestimmten Zeitintervallen;
- Berechnung der Häufigkeit, mit welcher der Körper (601) während eines bestimmten Zeitraums T1 detektiert wird;
- Unterscheidung zwischen den Körpern (601), die mit einer Häufigkeit vorhanden sind, welche eine bestimmte Schwelle S1 überschreitet, wobei diese Körper nachfolgend als unbewegte Körper bezeichnet werden, und den Körpern (601), die mit einer Häufigkeit vorhanden sind, welche die bestimmte Schwelle S1 unterschreitet, wobei diese Körper nachfolgend als Körper in Bewegung bezeichnet werden, in einem Punkt der Zone (603).

4. Verfahren nach Anspruch 3, bei dem insbesondere festgestellt werden soll, ob ein unbewegter Körper (601) relativ zu einem der Beobachtungspunkte folgendermaßen liegt:
- auf der anderen Seite der Grenzfläche (602),
- auf der gleichen Seite wie die Grenzfläche (602),
- an der Grenzfläche (602),
wobei die Videobilder, ausgehend vom Beobachtungspunkt (607), in bestimmten Zeitintervallen aufgenommen werden
und das Verfahren zudem die folgenden Schritte umfasst:
- Berechnung einer mittleren zeitlichen Fluktuation (707) der Grauwerte der Videobilder des Körpers (601),
für den Fall, dass der Körper (601) auf der anderen Seite der Grenzfläche (602) liegt:
- Detektion der Körper (601), die eine mittlere zeitliche Fluktuation der Grauwerte aufweisen, die eine bestimmte Schwelle S3 überschreitet (wobei diese Körper nachfolgend als auf der anderen Seite der Grenzfläche (602) liegende Körper bezeichnet werden), in einem Punkt der Zone (603);
für den Fall, dass der Körper (601) auf der gleichen Seite wie die Grenzfläche (602) liegt:
- Detektion der Körper (601), die eine mittlere zeitliche Fluktuation der Grauwerte aufweisen, die eine bestimmte Schwelle S4 unterschreitet (wobei diese Körper nachfolgend als auf der gleichen Seite wie die Grenzfläche (602) liegende Körper bezeichnet werden), in einem Punkt der Zone (603), wobei diese Schwelle S4 niedriger als die Schwelle S3 ist;
für den Fall, dass der Körper (601) an der Grenzfläche (602) liegt:
- Detektion der Körper (601), die eine mittlere zeitliche Fluktuation der Grauwerte aufweisen, die im Bereich zwischen der Schwelle S3 und der Schwelle S4 liegt (wobei diese Körper nachfolgend als an der Grenzfläche (602) liegende Körper bezeichnet werden).

5. Verfahren nach Anspruch 3, das insbesondere zur Feststellung dient, ob ein unbewegter Körper (601) relativ zu einem der Beobachtungspunkte folgendermaßen liegt:
- auf der anderen Seite der Grenzfläche (602),
- auf der gleichen Seite wie die Grenzfläche (602),
- an der Grenzfläche (602).
wobei die Videobilder, ausgehend vom Beobachtungspunkt (607), in bestimmten Zeitintervallen aufgenommen werden
und das Verfahren zudem folgenden Schritt umfasst:
- Durchführung einer Stereoanalyse des unbewegten Körpers (601) relativ zur Grenzfläche (602).

6. Verfahren nach einem der Ansprüche 4 oder 5, das ferner den folgenden Schritt umfasst:
- Senden eines Alarmsignals (711) gemäß den Detektionskriterien, die im einen oder anderen der Fälle nach Anspruch 4 oder Anspruch 5 angewandt werden, insbesondere in Gegenwart eines unbewegten Körpers (601), der unter der Oberfläche einer Wasser/Luft-Grenzfläche (602) liegt.

7. Verfahren nach einem der Ansprüche 1 bis 6, das insbesondere dazu dient, das Auftreten neuer Körper (601) in der Zone (603) zu detektieren,
wobei das Verfahren, wenn Kalotten erzeugt werden, ferner die folgenden Schritte umfasst:
- Wiederholung des Verfahrens zur Deduktion der Gegenwart eines Körpers (601) nach Anspruch 1 in vorbestimmten Zeitintervallen;
- Berechnung der Häufigkeit, mit welcher der Körper (601) während eines bestimmten Zeitraums T2 detektiert wird,
wobei der Zeitraum T2 so gewählt ist, das er größer als die Dauer der Phänomene im Zusammenhang mit den Körpern (601) ist, die detektiert werden;
- Unterscheidung zwischen den Körpern (601), die mit einer Häufigkeit vorhanden sind, welche eine bestimmte Schwelle S2 überschreitet, wobei diese Körper nachfolgend als üblicherweise vorhandene Körper bezeichnet werden, und den Körpern (601), die mit einer Häufigkeit vorhanden sind, welche die bestimmte Schwelle S2 unterschreitet, wobei diese Körper nachfolgend als neue Körper bezeichnet werden, in einem Punkt der Zone (603).

8. Verfahren nach den Ansprüchen 3 und 7 zusammen, das insbesondere dazu dient, neue und unbewegte Körper (601) zu detektieren, wobei das Verfahren so ausgelegt ist, dass der Zeitraum T1 kleiner gewählt ist als der Zeitraum T2.

9. Verfahren nach einem der Ansprüche 1 bis 8, das insbesondere dazu dient, eine statistische Schätzung der Verweildauer mindestens eines Körpers (601) in der Zone (603) Z während eines bestimmten Zeitraums T zu ergeben,
wobei das Verfahren, wenn Kalotten erzeugt werden, die folgenden Schritte umfasst:
- Durchführung einer Unterteilung der Zone (603) in elementare Zonen ?z,
- Durchführung des Verfahrens zur Deduktion der Gegenwart eines Körpers (601) nach Anspruch 1 in einer elementaren Zone ?z der Zone (603) während elementarer Zeitintervalle ?t,
- Berechnung der Häufigkeit ?t/T, mit der ein Körper (601) während des bestimmten Zeitraums T in einer elementaren Zone ?z der Zone (603) vorhanden ist.

10. Verfahren nach einem der Ansprüche 1 bis 9, das ferner den folgenden Schritt umfasst, wenn Kalotten erzeugt werden:
- Berechnung der Bahn der Körper (601), deren Gegenwart detektiert wurde.

11. Verfahren nach Anspruch 10, das insbesondere dazu dient, das Verschwinden eines Körpers (601) in einer bestimmten Zone (603), insbesondere das Verschwinden eines Schwimmers in Küstennähe, zu detektieren,
wobei das Verfahren ferner die folgenden Schritte umfasst:
- Detektion der Unterbrechung einer Bahn an der Grenze der Zone (603), insbesondere außerhalb der Warngrenzen.

12. Verfahren zum Detektieren eines Körpers (601) in einer Zone (603), die nahe einer Grenzfläche (602) zwischen zwei flüssigen (604) und/oder gasförmigen (605) Medien mit unterschiedlicher Brechzahl, insbesondere vom Typ Wasser/Luft, liegt, wobei "nahe" auch "an der Grenzfläche (602)" bezeichnet und das Verfahren die folgenden Schritte umfasst:
- Erzeugung mindestens eines Videobildes der Grenzfläche (602) und der Zone (603), ausgehend von mindestens einem Beobachtungspunkt (607), wobei jeder der Beobachtungspunkte auf einer Seite der Grenzfläche (602) liegt;
- Erzeugung der elektrischen Signale (608) zur Darstellung jedes Videobildes;
- Digitalisierung der elektrischen Signale (608), um jedem Videobild entsprechende Daten zu erzeugen;
- Verarbeitung der Daten durch Unterscheidung der Daten, die dem Videobild eines realen Körpers (601) entsprechen, von denen, die einem anscheinenden Videobild entsprechen, das von der Grenzfläche (602) erzeugt wurde,
wobei bei dem Verfahren zur Verarbeitung der Daten durch Unterscheidung der Daten, die dem Videobild eines realen Körpers (601) entsprechen, von denen, die dem anscheinenden Videobild entsprechen, das von der Grenzfläche (602) erzeugt wurde, Kalotten erzeugt und/oder jedem Pixel des Videobildes Darstellungselemente zugeordnet werden,
wobei das Verfahren insbesondere dazu dient, einen unbewegten Körper (601) nahe der Grenzfläche (602) zu detektieren, und bei dem Verfahren der Schritt der Verarbeitung der Daten die folgenden Schritte umfasst, wenn jedem Pixel Darstellungselemente zugeordnet sind:
- Bestätigung eines Darstellungselementes als unbewegt, wenn während n auf einander folgender Zeitintervalle ?t, die zusammen einen Zeitraum einer bestimmten Dauer T5 ergeben, das Darstellungselement mindestens mit einer Häufigkeit realisiert wird, die größer als eine bestimmte Schwelle S5 ist;
- Berechnen und Suchen der virtuellen Bilder von unbewegten Körpern (601).

13. Verfahren nach Anspruch 12, das insbesondere dazu dient, einen neuen unbewegten Körper (601) nahe der Grenzfläche (602) zu detektieren,
wobei das Verfahren die folgenden Schritte umfasst, wenn jedem Pixel Darstellungselemente zugeordnet sind:
- Wiederholung des Verfahrens zur Detektion der Gegenwart eines unbewegten Körpers (601) nach Anspruch 12 in auf einander folgenden Zeitintervallen ?t, die zusammen einen Zeitraum einer bestimmten Dauer T6 ergeben;
- Berechnung der Häufigkeit, mit der ein Körper (601) während des bestimmten Zeitraums T6 als unbewegt detektiert wird;
- Unterscheidung zwischen einem unbewegten Körper (601), der mit einer Häufigkeit vorhanden ist, die eine bestimmte Schwelle S6 überschreitet, und einem Körper (601), der mit einer Häufigkeit vorhanden ist, welche die bestimmte Schwelle S6 unterschreitet, wobei dieser Körper nachfolgend als neuer unbewegter Körper bezeichnet wird, in einem Punkt der Zone (603).

14. Verfahren nach Anspruch 13, bei dem insbesondere festgestellt werden soll, ob ein neuer unbewegter Körper (601) relativ zu einem der Beobachtungspunkte folgendermaßen liegt:
- auf der anderen Seite der Grenzfläche (602),
- auf der gleichen Seite wie die Grenzfläche (602),
- an der Grenzfläche (602),
wobei die Videobilder, ausgehend vom Beobachtungspunkt (607), in bestimmten Zeitintervallen aufgenommen werden,
und das Verfahren zudem die folgenden Schritte umfasst, wenn jedem Pixel Darstellungselemente zugeordnet sind:
- Wiederholung des Verfahrens zur Detektion der Gegenwart eines unbewegten Körpers (601) nach Anspruch 12 in auf einander folgenden Zeitintervallen ?t, die zusammen einen bestimmten Zeitraum T7 ergeben,
- Berechnung der Häufigkeit, mit der ein Körper (601) während des bestimmten Zeitraums T7 als unbewegt und neu detektiert wird, wobei der Zeitraum T7 so gewählt ist, dass er größer als die Dauer der beobachteten Phänomene ist, und wobei der Zeitraum T7 kleiner als der Zeitraum T6 ist,
für den Fall, dass der Körper (601) auf der anderen Seite der Grenzfläche (602) liegt:
- Detektion zwischen einem Körper (601), der mit einer Häufigkeit vorhanden ist, die eine bestimmte Schwelle S7 überschreitet, und einem Körper (601), der mit einer Häufigkeit vorhanden ist, welche die bestimmte Schwelle S7 unterschreitet, wobei dieser Körper nachfolgend als neuer unbewegter Körper auf der anderen Seite der Grenzfläche (602) bezeichnet wird, in einem Punkt der Zone (603);
für den Fall, dass der Körper (601) auf der gleichen Seite wie die Grenzfläche (602) liegt:
- Detektion zwischen einem Körper (601), der mit einer Häufigkeit vorhanden ist, die eine bestimmte Schwelle S8 überschreitet, und einem Körper (601), der mit einer Häufigkeit vorhanden ist, welche die bestimmte Schwelle S8 unterschreitet, wobei dieser Körper nachfolgend als neuer unbewegter Körper auf der gleichen Seite der Grenzfläche (602) bezeichnet wird, in einem Punkt der Zone (603), wobei die Schwelle S8 niedriger als die Schwelle S7 ist;
für den Fall, dass der Körper (601) an der Grenzfläche (602) liegt:
- Detektion eines Körpers (601), der mit einer Häufigkeit vorhanden ist, die im Bereich zwischen der Schwelle S7 und der Schwelle S8 liegt, in einem Punkt der Zone (603),
wobei dieser Körper nachfolgend als an der Grenzfläche (602) liegender Körper bezeichnet wird.

15. Verfahren nach Anspruch 14, ferner mit dem Schritt des Sendens eines Alarmsignals (711) gemäß den Detektionskriterien, die im einen oder anderen der Fälle nach Anspruch 14, angewandt werden, insbesondere in Gegenwart eines unbewegten Körpers (601), der sich unter der Oberfläche einer Wasser/Luft-Grenzfläche (602) befindet.

16. System zum Detektieren eines Körpers (601) in einer Zone (603), die nahe einer Grenzfläche (602) zwischen zwei flüssigen (604) und/oder gasförmigen (605) Medien mit unterschiedlicher Brechzahl, insbesondere vom Typ Wasser/Luft, liegt, wobei "nahe" auch "an der Grenzfläche (602)" bezeichnet und das System folgendes umfasst:
- Mittel, insbesondere eine Videokamera (606), zur Erzeugung mindestens eines Videobildes der Grenzfläche (602) und der Zone (603), ausgehend von mindestens einem Beobachtungspunkt (607), wobei jeder der Beobachtungspunkte auf einer Seite der Grenzfläche (602) liegt;
- Digitalwandlungsmittel (609), um ausgehend von den jedem Videobild entsprechenden elektrischen Signalen (608) digitale Daten zu erzeugen;
- Datenverarbeitungsmittel (700) zur Unterscheidung der Daten, die dem Videobild eines realen Körpers (601) entsprechen, von denen, die einem anscheinenden Videobild entsprechen, das von der Grenzfläche (602) erzeugt wurde, wobei die Datenverarbeitungsmittel zur Unterscheidung der Daten, die dem Videobild eines realen Körpers (601) entsprechen, von denen, die dem anscheinenden Videobild entsprechen, das von der Grenzfläche (602) erzeugt wurde, Rechenmittel (702) (701) umfassen, um:
- Kalotten zu erzeugen und/oder
- jedem Pixel des Videobildes Darstellungselemente zuzuordnen;
wobei das System so ausgelegt ist, dass die Datenverarbeitungsmittel (700) Rechenmittel (702) (701) umfassen, um, wenn Kalotten erzeugt werden:
- jeder Kalotte Merkmale zuzuweisen;
- die Gegenwart eines Körpers (601) zu deduzieren, wenn die Merkmale eine vorbestimmte Schwelle SC überschreiten.

17. System nach Anspruch 16, bei dem der Körper (601) mit Licht bestrahlt wird, das auf der Grenzfläche (602) Reflexe erzeugt,
wobei das System so ausgelegt ist, dass, wenn Kalotten erzeugt werden, die Mittel zur Erzeugung mindestens eines Videobildes der Grenzfläche (602) und der Zone (603) einen Polarisationsfilter (611) umfassen, der die Lichtreflexe auf der Grenzfläche (602) zumindest teilweise beseitigt.

18. System nach Anspruch 16 oder 17, das insbesondere dazu dient, zwischen einem unbewegten Körper (601) und einem in Bewegung befindlichen Körper (601) zu unterschieden,
wobei das System ferner folgendes umfasst:
- Mittel (703) zur Wiederholung des Verfahrens zur Deduktion der Gegenwart eines Körpers (601) nach Anspruch 16 in vorbestimmten Zeitintervallen;
- wobei die Rechenmittel (702) (701), folgendes umfassen, wenn Kalotten erzeugt werden:
- Rechenwerke (705) zur Berechnung der Häufigkeit, mit welcher der Körper (601) während eines bestimmten Zeitraums T1 detektiert wird;
- Diskriminatoren (706) zur Unterscheidung zwischen den Körpern (601), die mit einer Häufigkeit vorhanden sind, die eine bestimmte Schwelle S1 überschreitet, wobei diese Körper (601) nachfolgend als unbewegte Körper (601) bezeichnet werden, und den Körpern (601), die mit einer Häufigkeit vorhanden sind, welche die bestimmte Schwelle S1 unterschreitet, wobei diese Körper (601) nachfolgend als Körper (601) in Bewegung bezeichnet werden, in einem Punkt der Zone (603).

19. System nach Anspruch 18, das insbesondere dazu dient, festzustellen, ob ein unbewegter Körper (601) relativ zu einem der Beobachtungspunkte folgendermaßen liegt:
- auf der anderen Seite der Grenzfläche (602),
- auf der gleichen Seite wie die Grenzfläche (602),
- an der Grenzfläche (602),
wobei die Videobilder, ausgehend vom Beobachtungspunkt (607), in bestimmten Zeitintervallen aufgenommen werden,
und die Rechenmittel (702) (701) zudem folgendes umfassen:
- Mittel zur Berechnung der mittleren zeitlichen Fluktuation (707) der Grauwerte der Videobilder des Körpers (601),
für den Fall, dass der Körper (601) auf der anderen Seite der Grenzfläche (602) liegt,
die Rechenmittel (702) (701) ferner folgendes umfassen:
- Detektionsmittel (708a) S3, um die Körper (601), die eine mittlere zeitliche Fluktuation der Grauwerte aufweisen, die eine bestimmte Schwelle S3 überschreitet, in einem Punkt der Zone (603) zu detektieren, wobei diese Körper (601) nachfolgend als Körper (601) auf der anderen Seite der Grenzfläche (602) bezeichnet werden;
für den Fall, dass der Körper (601) auf der gleichen Seite wie die Grenzfläche (602) liegt:
- Detektionsmittel (708b) S4, um die Körper (601), die eine mittlere zeitliche Fluktuation der Grauwerte aufweisen, die eine bestimmte Schwelle S4 unterschreitet, in einem Punkt der Zone (603) zu detektieren, wobei diese Körper (601) nachfolgend als Körper (601) auf der gleichen Seite wie die Grenzfläche (602) bezeichnet werden und die Schwelle S4 niedriger als die Schwelle S3 ist;
für den Fall, dass der Körper (601) an der Grenzfläche (602) liegt:
- Detektionsmittel (708c) S3/S4, um die Körper (601), die eine mittlere zeitliche Fluktuation der Grauwerte aufweisen, die im Bereich zwischen der Schwelle S3 und der Schwelle S4 liegt, in einem Punkt der Zone (603) zu detektieren, wobei diese Körper (601) nachfolgend als Körper (601) an der Grenzfläche (602) bezeichnet werden).

20. System nach Anspruch 18, mit dem insbesondere festgestellt werden soll, ob ein unbewegter Körper (601) relativ zu einem der Beobachtungspunkte folgendermaßen liegt:
- auf der anderen Seite der Grenzfläche (602),
- auf der gleichen Seite wie die Grenzfläche (602),
- an der Grenzfläche (602),
wobei die Videobilder, ausgehend vom Beobachtungspunkt (607), in bestimmten Zeitintervallen aufgenommen werden,
und das System zudem folgendes umfasst:
- Mittel (709) zur Stereoanalyse des unbewegten Körpers (601) relativ zur Grenzfläche (602).

21. System nach einem der Ansprüche 19 oder 20, ferner mit:
- Sendemitteln (716) zum Senden eines Alarmsignals (711) gemäß den Detektionskriterien, die im einen oder anderen der Fälle nach Anspruch 19 oder Anspruch 20 angewandt werden, insbesondere in Gegenwart eines unbewegten Körpers (601), der unter der Oberfläche einer Wasser/Luft-Grenzfläche (602) liegt.

22. System nach einem der Ansprüche 16 bis 21, das insbesondere dazu dient, das Auftreten neuer Körper (601) in der Zone (603) zu detektieren,
wobei das System ferner folgendes umfasst, wenn Kalotten erzeugt werden:
- Wiederholungsmittel (703) zur Wiederholung des Verfahrens zur Deduktion der Gegenwart eines Körpers (601) nach Anspruch 16 in bestimmten Zeitintervallen;
wobei die Rechenmittel (702) (701) ferner Mittel umfassen, um:
- die Häufigkeit zu berechnen, mit welcher der Körper (601) während eines bestimmten Zeitraums T2 detektiert wird, wobei der Zeitraum T2 so gewählt ist, dass er größer als die Dauer der Phänomene im Zusammenhang mit den Körpern (601) ist, die detektiert werden;
- in einem Punkt der Zone (603) zwischen den Körpern (601). die mit einer Häufigkeit vorhanden sind, die eine bestimmte Schwelle S2 überschreitet, wobei diese Körper (601) nachfolgend als üblicherweise vorhandene Körper (601) bezeichnet werden, und den Körpern (601) zu unterscheiden, die mit einer Häufigkeit vorhanden sind, welche die bestimmte Schwelle S2 unterschreitet, wobei diese Körper (601) nachfolgend als neue Körper (601) bezeichnet werden.

23. System nach den Ansprüchen 18 und 22 zusammen, das insbesondere dazu dient, neue und unbewegte Körper (601) zu detektieren, wobei das System so ausgelegt ist, dass der Zeitraum T1 kleiner gewählt ist als der Zeitraum T2.

24. System nach einem der Ansprüche 16 bis 23, das insbesondere dazu dient, eine statistische Schätzung der Verweildauer mindestens eines Körpers (601) in der Zone (603) Z während eines bestimmten Zeitraums T zu ergeben,
wobei das System folgendes umfasst, wenn Kalotten erzeugt werden:
- Mittel zur Unterteilung der Zone (603) in elementare Zonen ?z,
- Wiederholungsmittel (703) zur Wiederholung des Verfahrens zur Deduktion der Gegenwart eines Körpers (601) nach Anspruch 21 in einer elementaren Zone ?z der Zone (603) während elementarer Zeitintervalle ?t,
wobei die Rechenmittel (702) (701) ferner Mittel zur Berechnung der Häufigkeit ?t/T, mit der ein Körper (601) während des vorbestimmten Zeitraums T in einer elementaren Zone ?z der Zone (603) vorhanden ist, umfassen.

25. System nach einem der Ansprüche 16 bis 24, wobei die Rechenmittel (702) (701) ferner Mittel zur Berechnung der Bahn der Körper (601), deren Gegenwart detektiert wurde, umfassen.

26. System nach Anspruch 25, das insbesondere dazu dient, das Verschwinden eines Körpers (601) in einer bestimmten Zone (603), insbesondere das Verschwinden eines Schwimmers in Küstennähe, zu detektieren,
wobei das System ferner folgendes umfasst:
- Detektionsmittel (708) zum Detektieren der Unterbrechung einer Bahn an der Grenze der Zone (603), insbesondere außerhalb der Warngrenzen.

27. System zum Detektieren eines Körpers (601) in einer Zone (603), die nahe einer Grenzfläche (602) zwischen zwei flüssigen (604) und/oder gasförmigen (605) Medien mit unterschiedlicher Brechzahl, insbesondere vom Typ Wasser/Luft, liegt, wobei "nahe" auch "an der Grenzfläche (602)" bezeichnet und das System folgendes umfasst:
- Mittel, insbesondere eine Videokamera (606), zur Erzeugung mindestens eines Videobildes der Grenzfläche (602) und der Zone (603), ausgehend von mindestens einem Beobachtungspunkt (607), wobei jeder der Beobachtungspunkte auf einer Seite der Grenzfläche (602) liegt;
- Digitalwandlungsmittel (609), um ausgehend von den jedem Videobild entsprechenden elektrischen Signalen (608) digitale Daten zu erzeugen;
- Datenverarbeitungsmittel (700) zur Unterscheidung der Daten, die dem Videobild eines realen Körpers (601) entsprechen, von denen, die einem anscheinenden Videobild entsprechen, das von der Grenzfläche (602) erzeugt wurde,
wobei die Datenverarbeitungsmittel zur Unterscheidung der Daten, die dem Videobild eines realen Körpers (601) entsprechen, von denen, die dem anscheinenden Videobild entsprechen, das von der Grenzfläche (602) erzeugt wurde, Rechenmittel (702) (701) umfassen, um:
- Kalotten zu erzeugen und/oder
- jedem Pixel des Videobildes Darstellungsetemente zuzuordnen, wobei insbesondere ein unbewegter Körper (601) nahe der Grenzfläche (602) detektiert werden soll,
wobei das System so ausgelegt ist, dass die Datenverarbeitungsmittel (700) zur Unterscheidung der Daten, die dem Videobild eines realen Körpers (601) entsprechen, von denen, die dem anscheinenden Videobild entsprechen, das von der Grenzfläche (602) erzeugt wurde, Rechenmittel (702) (701) umfassen, um, wenn jedem Pixel Darstellungselemente zugeordnet sind:
- ein Darstellungselement als unbewegt zu bestätigen, wenn während n auf einander folgender Zeitintervalle ?t, die zusammen einen Zeitraum einer bestimmten Dauer T5 ergeben, wobei das Darstellungselement mindestens mit einer Häufigkeit realisiert wird, die eine bestimmte Schwelle S5 überschreitet;
- die virtuellen Bilder von unbewegten Körpern (601) zu berechnen und zu suchen.

28. System nach Anspruch 27, das insbesondere dazu dient, einen neuen unbewegten Körper (601) nahe der Grenzfläche (602) zu detektieren,
wobei das System folgendes umfasst, wenn jedem Pixel Darstellungselemente zugeordnet sind:
- Wiederholungsmittel (703) zur Wiederholung des Verfahrens zur Detektion der Gegenwart eines unbewegten Körpers (601) nach Anspruch 27 in auf einander folgenden Zeitintervallen ?t, die zusammen einen Zeitraum einer bestimmten Dauer T6 ergeben;
wobei die Rechenmittel (702) (701) ferner folgendes umfassen:
- Mittel zum Berechnen der Häufigkeit, mit der ein Körper (601) während des bestimmten Zeitraums T6 als unbewegt deiektiert wird;
- Mittel zur Unterscheidung zwischen einem unbewegten Körper (601), der mit einer Häufigkeit vorhanden ist, die eine bestimmte Schwelle S6 überschreitet, und einem Körper (601), der mit einer Häufigkeit vorhanden ist, welche die bestimmte Schwelle S6 unterschreitet, wobei dieser Körper (601) nachfolgend als neuer unbewegter Körper (601) bezeichnet wird, in einem Punkt der Zone (603).

29. System nach Anspruch 28, das insbesondere dazu dient, festzustellen, ob ein neuer unbewegter Körper (601) relativ zu einem der Beobachtungspunkte folgendermaßen liegt:
- auf der anderen Seite der Grenzfläche (602),
- auf der gleichen Seite wie die Grenzfläche (602),
- an der Grenzfläche (602).
wobei die Videobilder, ausgehend vom Beobachtungspunkt (607), in bestimmten Zeitintervallen aufgenommen werden,
und das System zudem folgendes umfasst, wenn jedem Pixel Darstellungselemente zugeordnet sind:
- Wiederholungsmittel (703) zur Wiederholung des Verfahrens zur Detektion der Gegenwart eines unbewegten Körpers (601) nach Anspruch 31 in auf einander folgenden Zeitintervallen ?t, die zusammen einen Zeitraum einer vorbestimmten Dauer T7 ergeben,
wobei die Rechenmittel (702) (701) ferner folgendes umfassen:
- Mittel zum Berechnen Mittel der Häufigkeit, mit der ein Körper (601) während des bestimmten Zeitraums T7 als unbewegt und neu detektiert wird, wobei der Zeitraum T7 so gewählt ist, dass er größer als die Dauer der beobachteten Phänomene ist, und wobei der Zeitraum T7 kleiner als der Zeitraum T6 ist,
für den Fall, dass der Körper (601) auf der anderen Seite der Grenzfläche (602) liegt:
- Detektionsmittel (708a) zur Detektion zwischen einem Körper (601), der mit einer Häufigkeit vorhanden ist, die größer als eine bestimmte Schwelle S7 ist, und einem Körper (601), der mit einer Häufigkeit vorhanden ist, die kleiner als die bestimmte Schwelle S7 ist (wobei dieser Körper (601) nachfolgend als neuer unbewegter Körper (601) auf der anderen Seite der Grenzfläche (602) bezeichnet wird), in einem Punkt der Zone (603);
für den Fall, dass der Körper (601) auf der gleichen Seite wie die Grenzfläche (602) liegt:
- Detektionsmittel (708b) zur Detektion zwischen einem Körper (601), der mit einer Häufigkeit vorhanden ist, die eine bestimmte Schwelle S8 überschreitet, und einem Körper (601), der mit einer Häufigkeit vorhanden ist, welche die bestimmte Schwelle S8 unterschreitet (wobei dieser Körper (601) nachfolgend als neuer unbewegter Körper (601) auf der gleichen Seite der Grenzfläche (602) bezeichnet wird), in einem Punkt der Zone (603), wobei die Schwelle S8 niedriger als die Schwelle S7 ist;
für den Fall, dass der Körper (601) an der Grenzfläche (602) liegt:
- Detektionsmittel (708c) zur Detektion eines Körpers (601), der mit einer Häufigkeit vorhanden ist, die im Bereich zwischen der Schwelle S7 und der Schwelle S8 liegt, in einem Punkt der Zone (603), wobei dieser Körper (601) nachfolgend als an der Grenzfläche (602) befindlicher Körper (601) bezeichnet wird.

30. System nach Anspruch 29, ferner mit Sendemitteln (716) zum Senden eines Alarmsignals (711) gemäß den Detektionskriterien, die im einen oder anderen der Fälle nach Anspruch 29 angewandt werden, insbesondere in Gegenwart eines unbewegten Körpers (601), der unter der Oberfläche einer Wasser/Luft-Grenzfläche (602) liegt.

31. Verfahren nach einem der Ansprüche 1 bis 15, das insbesondere zur Überwachung eines Schwimmbeckens dient.

32. System nach einem der Ansprüche 16 bis 30, das insbesondere zur Überwachung eines Schwimmbeckens dient.

33. Anwendung des Verfahrens nach einem der Ansprüche 1 bis 15 zur Überwachung eines Schwimmbeckens.

34. Verwendung des Systems nach einem der Ansprüche 16 bis 30 zur Überwachung eines Schwimmbeckens.

## Claims

1. A method for detecting an object (601) in a zone (603) situated in the proximity of an interface (602) between two liquid media (604) and/or gaseous media (605) having different refractive indices, especially an interface of water/air type; "in the proximity of" also denotes "at the interface (602)"; the said method comprising the following stages:
- the stage of creating at least one video image of the said interface (602) and of the said zone (603) from at least one observation point (607), each of the observation points being situated on one side of the said interface (602);
- the stage of producing electrical signals (608) representative of each video image;
- the stage of digitizing the electrical signals (608) in such a way as to produce data corresponding to each video image;
- the stage of processing the said data, while discriminating the data corresponding to the video image of a real object (601) from those that correspond to the apparent video image generated by the said interface (602).
Said method being such that, to process the said data while discriminating the data corresponding to the said video image of a real object (601) from those corresponding to the said apparent video image generated by the said interface (602), calottes are generated and/or primitives are associated with each pixel of the said video image,
said method being such that, when calottes are generated, the stage of processing the said data comprises the following stages:
- the stage of associating characteristics with each calotte;
- the stage of deducing the presence of an object (601) if the characteristics exceed a predetermined threshold SC.

2. A method according to claim 1; the said object (601) being illuminated by light that produces reflections at the said interface (602);
the said method comprising the following stage when calottes are generated:
- the stage of creating at least one video image of the said interface (602) and of the said zone (603) by using a polarizing filter (611) to eliminate, at least partly, the light reflections at the said interface (602).

3. A method according to claim 1 or 2, intended more particularly to discriminate between a stationary object (601) and a moving object (601);
the said method also comprising the following stages when calottes are generated:
- the stage of iterating, at specified time intervals, the process, specified in claim 4, of deducing the presence of an object (601);
- the stage of calculating the number of times that the object (601) is detected during a specified time period T1;
- the stage of discriminating, at a point of the said zone (603), between the objects (601) that are present a number of times larger than a specified threshold S1 (the said objects being referred to hereinafter as stationary objects) and the objects (601) that are present a number of times smaller than the said specified threshold S1 (the said objects being referred to hereinafter as moving objects).

4. A method according to claim 3, intended more particularly to determine whether a stationary object (601) is situated:
- on the other side of the interface (602),
- on the same side of the interface (602),
- at the interface (602)
relative to one of the said observation points;
the video images being recorded from the said observation point (607) at specified time intervals;
the said method also comprising the following stages:
- the stage of calculating (707) the mean fluctuation per unit time of the gray levels of the said video images of the said object (601);
Case in which the object (601) is situated on the other side of the interface (602):
- the stage of detecting, at a point of the said zone (603), the objects (601) that exhibit a mean fluctuation per unit time of the gray levels larger than a specified threshold S3; the said objects being referred to hereinafter as objects situated on the other side of the interface (602)
Case in which the object (601) is situated on the same side of the interface (602):
- the stage of detecting, at a point of the said zone (603), the objects (601) that exhibit a mean fluctuation per unit time of the gray levels smaller than a specified threshold S4 (the said objects being referred to hereinafter as objects situated on the same side of the interface (602), the said threshold S4 being smaller than the threshold S3
Case in which the object (601) is situated at the interface (602):
- the stage of detecting, at a point of the said zone (603), the objects (601) that exhibit a mean fluctuation per unit time of the gray levels between the threshold S3 and the threshold S4 (the said objects being referred to hereinafter as objects situated at the interface (602)).

5. A method according to claim 3, intended more particularly to determine whether a stationary object (601) is situated:
- on the other side of the interface (602),
- on the same side of the interface (602),
- at the interface (602)
relative to one of the said observation points;
the video images being recorded from the said observation point (607) at specified time intervals;
the said method also comprising the following stage:
- the stage of performing a stereoscopic analysis of the object (601) that is stationary relative to the said interface (602).

6. A method according to one of claims 4 or 5, also comprising the following stage:
- the stage of emitting a warning signal (711) according to the detection criteria applied in one or the other of the cases specified in claim 6 or in claim 7, especially in the presence of a stationary object (601) situated under the surface of a water/air interface (602).

7. A method according to any one of claims 1 to 6, intended more particularly to detect the appearance of new objects (601) in the said zone (603);
the said method also comprising when calottes are generated:
- the stage of iterating, at specified time intervals, the process, specified in claim 4, for deducing the presence of an object (601);
- the stage of calculating the number of times that the object (601) is detected during a specified time period T2; the said time period T2 being chosen to be longer than the duration of the phenomena associated with the objects (601) being detected;
- the stage of discriminating, at a point of the said zone (603), between the objects (601) that are present a number of times larger than a specified threshold S2 (the said objects being referred to hereinafter as usually present objects) and the objects (601) that are present a number of times smaller than the said specified threshold S2 (the said objects being referred to hereinafter as new objects).

8. A method according to claims 3 and 7 taken in combination, intended more particularly to detect new and stationary objects (601); the said method being such that the time period T1 is chosen to be shorter than time period T2.

9. A method according to any one of claims 1 to 8, intended more particularly to yield a statistical estimate of the time of occupancy of the said zone Z (603) by at least one object (601) during a specified time period T;
the said method comprising the following stages when calottes are generated:
- the stage of performing a partition of the said zone (603) into elemental zones z,
- the stage of applying the process, specified in claim 4, of deducing the presence of an object (601) in an elemental zone z (603) during elemental time intervals t;
- the stage of calculating the number of times t/T that an object (601) is present in an elemental zone z (603) during the specified time period T.

10. A method according to any one of claims 1 to 9; the said method also comprising the following stage when calottes are generated:
- the stage of calculating the trajectory of objects (601) whose presence has been detected.

11. A method according to claim 10, intended more particularly to detect the disappearance of an object (601) in a specified zone (603), especially the disappearance of a swimmer at the seashore;
the said method comprising the following stages:
- the stage of detecting when a trajectory stops at the boundary of the said zone (603), especially beyond the surveillance limits.

12. A method for detecting an object (601) in a zone (603) situated in the proximity of an interface (602) between two liquid media (604) and/or gaseous media (605) having different refractive indices, especially an interface of water/air type; within the meaning of the present invention, "in the proximity of" also denotes "at the interface (602)"; the said method comprising the following stages:
- the stage of creating at least one video image of the said interface (602) and of the said zone (603) from at least one observation point (607), each of the observation points being situated on one side of the said interface (602);
- the stage of producing electrical signals (608) representative of each video image;
- the stage of digitizing the electrical signals (608) in such a way as to produce data corresponding to each video image;
- the stage of processing the said data, while discriminating the data corresponding to the video image of a real object (601) from those that correspond to the apparent video image generated by the said interface (602).
Said method being such that, to process the said data while discriminating the data corresponding to the said video image of a real object (601) from those corresponding to the said apparent video image generated by the said interface (602), calottes are generated and/or primitives are associated with each pixel of the said video image,
Said method being intended more particularly to detect a stationary object (601) in the proximity of the said interface (602); the said method being such that the stage of processing the said data comprises the following stages when primitives are associated with each pixel:
- the stage of validating a primitive as stationary if, during n successive time intervals t composing a specified time period T5, the said primitive is materialized (within the meaning of the present invention) at least a number of times larger than a specified threshold S5;
- the stage of calculating and searching for virtual images of stationary objects (601) (within the meaning of the present invention).

13. A method according to claim 12, intended more particularly to detect a new stationary object (601) in the proximity of the said interface (602);
the said method comprising the following stages when primitives are associated with each pixel:
- the stage of iterating, at successive time intervals t composing a specified time period T6, the process, specified in claim 12, of detecting the presence of a stationary object (601),
- the stage of calculating the number of times that an object (601) is detected as being stationary during the said specified time period T6; the said time period T6 being chosen to be longer than the duration of the phenomena associated with the object (601) being detected; the said time period T6 being shorter than the said time period T5,
- the stage of discriminating, at a point of the said zone (603), between a stationary object (601) that is present a number of times larger than a specified threshold S6 and an object (601) that is present a number of times smaller than the said specified threshold S6, the said object being referred to hereinafter as the new stationary object.

14. A method according to claim 13, intended more particularly to determine whether a stationary object (601) is situated:
- on the other side of the interface (602),
- on the same side of the interface (602),
- at the interface (602)
relative to one of the said observation points;
the video images being recorded from the said observation point (607) at specified time intervals;
the said method comprising the following stages when primitives are associated with each pixel:
- the stage of iterating, at successive time intervals t composing a specified time period T7, the process, specified in claim 14, of detecting the presence of a stationary object (601),
- the stage of calculating the number of times that an object (601) is detected as being stationary and new during the said specified time period T7; the said time period T7 being chosen to be longer than the duration of the phenomena being observed; the said time period T7 being shorter than the said time period T6,
Case in which the object (601) is situated on the other side of the interface (602):
- the stage of detecting, at a point of the said zone (603), between an object (601) that is present a number of times larger than a specified threshold S7 and an object (601) that is present a number of times smaller than the said specified threshold S7, the said object being referred to hereinafter as the new stationary object situated on the other side of the interface (602);
Case in which the object (601) is situated on the same side of the interface (602):
- the stage of detecting, at a point of the said zone (603), between an object (601) that is present a number of times larger than a specified threshold S8 and an object (601) that is present a number of times smaller than the said specified threshold S8, the said object being referred to hereinafter as the new stationary object situated on the same side of the interface (602); the said threshold S8 being smaller than the threshold S7;
Case in which the object (601) is situated at the interface (602):
- the stage of detecting, at a point of the said zone (603), an object (601) that is present a number of times between the threshold S7 and the threshold S8
said object being referred to hereinafter as object situated at the interface (602).

15. A method according to claim 14, also including the stage of emitting a warning signal (711) according to the detection criteria applied in one or the other of the cases specified in claim 16, especially in the presence of a stationary object (601) situated under the surface of a water/air interface (602).

16. A system for detecting an object (601) in a zone (603) situated in the proximity of an interface (602) between two liquid media (604) and/or gaseous media (605) having different refractive indices, especially an interface of the water/air type; "in the proximity of" also denotes "at the interface (602)"; the said system comprising:
- means, especially a video camera (606), for creating at least one video image of the said interface (602) and of the said zone (603) from at least one observation point (607), each of the observation points being situated on one side of the said interface (602);
- digital conversion means (609) for producing digital data from the electrical signals (608) representative of each video image;
- information-processing means (700) for discriminating the data corresponding to the video image of a real object (601) from those corresponding to the apparent video image generated by the said interface (602); he said information-processing means for discriminating the data corresponding to the video image of a real object (601) from those corresponding to the apparent video image generated by the said interface (602) comprising calculating means (702) (701) for:
- generating calottes and/or
- associating primitives with each pixel of the said video image,
Said system being such that the said information-processing means (700) comprise calculating means (702) (701) for, when calottes are generated:
- associating characteristics with each calotte;
- deducing the presence of an object (601) if the characteristics exceed a predetermined threshold SC.

17. A system according to claim 16; the said object (601) being illuminated by light that produces reflections at the said interface (602); the said system being such that, when calottes are generated, the said means for creating at least one video image of the said interface (602) and of the said zone (603) comprise a polarizing filter (611) to eliminate, at least partly, the light reflections at the said interface (602).

18. A system according to any one of claims 16 or 17; intended more particularly to discriminate between a stationary object (601) and a moving object (601);
the said system also comprising:
- iterating means (703) for iterating, at specified time intervals, the process, specified in claim 16, of deducing the presence of an object (601);
the said calculating means (702) (701) comprising, when calottes are generated,:
- totalizers (705) for calculating the number of times that the object (601) is detected during a specified time period T1;
- discriminators (706) for discriminating, at a point of the said zone (603), between the objects (601) that are present a number of times larger than a specified threshold S1, the said objects (601) being referred to hereinafter as stationary objects (601) and the objects (601) that are present a number of times smaller than the said specified threshold S1, the said objects (601) being referred to hereinafter as moving objects (601).

19. A system according to claim 18, intended more particularly to determine whether a stationary object (601) is situated:
- on the other side of the interface (602),
- on the same side of the interface (602),
- at the interface (602)
relative to one of the said observation points;
the video images being recorded from the said observation point (607) at specified time intervals;
the calculating means (702) (701) also comprising:
- means for calculating (707) the mean fluctuation per unit time of the gray levels of the said video images of the said object (601),
Case in which the object (601) is situated on the other side of the interface (602):
the said calculating means (702) (701) also comprising:
- detecting means S3 (708a) for detecting, at a point of the said zone (603), the objects (601) that exhibit a mean fluctuation per unit time of the gray levels larger than a specified threshold S3, the said objects (601) being referred to hereinafter as objects (601) situated on the other side of the interface (602),
Case in which the object (601) is situated on the same side of the interface (602):
- detecting means S4 (708b) for detecting, at a point of the said zone (603), the objects (601) that exhibit a mean fluctuation per unit time of the gray levels smaller than a specified threshold S4, the said objects (601) being referred to hereinafter as objects (601) situated on the same side of the interface (602), the said threshold S4 being smaller than the threshold S3
Case in which the object (601) is situated at the interface (602):
- detecting means S3/S4 (708c) for detecting, at a point of the said zone (603), the objects (601) that exhibit a mean fluctuation per unit time of the gray levels between the threshold S3 and the threshold S4, the said objects (601) being referred to hereinafter as objects (601) situated at the interface (602).

20. A system according to claim 18, intended more particularly to determine whether a stationary object (601) is situated:
- on the other side of the interface (602),
- on the same side of the interface (602),
- at the interface (602)
relative to one of the said observation points;
the video images being recorded from the said observation point (607) at specified time intervals;
the said system also comprising:
- means (709) for stereoscopic analysis of the object (601) that is stationary relative to the said interface (602).

21. A system according to one of claims 19 or 20, also including:
- emitting means (716) for emitting a warning signal (711) according to the detection criteria applied in one or the other of the cases specified in claim 19 or in claim 20, especially in the presence of a stationary object (601) situated under the surface of a water/air interface (602).

22. A system according to any one of claims 16 to 21, intended more particularly to detect the appearance of new objects (601) in the said zone (603);
the said system also comprising, when calottes are generated,:
- iterating means (703) for iterating, at specified time intervals, the process, specified in claim 21, of deducing the presence of an object (601);
the said calculating means (702) (701) also comprising means for:
- calculating the number of times that the object (601) is detected during a specified time period T2; the said time period T2 being chosen to be longer than the duration of the phenomena associated with the objects (601) being detected;
- discriminating, at a point of the said zone (603), between the objects (601) that are present a number of times larger than a specified threshold S2, the said objects (601) being referred to hereinafter as usually present objects (601) and the objects (601) that are present a number of times smaller than the said specified threshold S2, the said objects (601) being referred to hereinafter as new objects (601).

23. A system according to claims 18 and 22 taken in combination, intended more particularly to detect new and stationary objects (601); the said system being such that the time period T1 is chosen to be shorter than the time period T2.

24. A system according to any one of claims 16 to 23, intended more particularly to yield a statistical estimate of the time of occupancy of the said zone Z (603) by at least one object (601) during a specified time period T;
the said system comprising the following stages, when calottes are generated:
- partitioning means for performing a partition of the said zone (603) into elemental zones Δz,
- iterating means (703) for iterating, in an elemental zone Δz (603) during elemental time intervals Δt, the process, specified in claim 21, of deducing the presence of an object (601);
- the said calculating means (702) (701) also comprising means for calculating the number of times Δt/T that an object (601) is present in an elemental zone Δz (603) during the specified time period T.

25. A system according to any one of claims 16 to 24; the said calculating means (702) (701) also comprising means for calculating the trajectory of the objects (601) whose presence has been detected.

26. A system according to claim 25, intended more particularly to detect the disappearance of an object (601) in a specified zone (603), especially the disappearance of a swimmer at the seashore;
the said system also comprising:
- detecting means (708) for detecting when a trajectory stops at the boundary of the said zone (603), especially beyond the surveillance limits.

27. A system for detecting an object (601) in a zone (603) situated in the proximity of an interface (602) between two liquid media (604) and/or gaseous media (605) having different refractive indices, especially an interface of the water/air type; "in the proximity of" also denotes "at the interface (602)"; the said system comprising:
- means, especially a video camera (606), for creating at least one video image of the said interface (602) and of the said zone (603) from at least one observation point (607), each of the observation points being situated on one side of the said interface (602);
- digital conversion means (609) for producing digital data from the electrical signals (608) representative of each video image;
- information-processing means (700) for discriminating the data corresponding to the video image of a real object (601) from those corresponding to the apparent video image generated by the said interface (602); the said information-processing means for discriminating the data corresponding to the video image of a real object (601) from those corresponding to the apparent video image generated by the said interface (602) comprising calculating means (702) (701) for:
- generating calottes and/or
- associating primitives with each pixel of the said video image, intended more particularly to detect a stationary object (601) in the proximity of the said interface (602);
the said system being such that the said information-processing means (700) for discriminating the data corresponding to the video image of a real object (601) from those corresponding to the apparent video image generated by the said interface (602) comprise calculating means (702) (701) for, when primitives are associated with each pixel:
- validating a primitive as stationary if, during n successive time intervals Δt composing a specified time period T5, the said primitive is materialized at least a number of times larger than a specified threshold S5;
- calculating and searching for the virtual images of stationary objects (601).

28. A system according to claim 31, intended more particularly to detect a new stationary object (601) in the proximity of the said interface (602);
the said system comprising when primitives are associated with each pixel:
- iterating means (703) for iterating, at successive time intervals Δt composing a specified time period T6, the process, specified in claim 27, of detecting the presence of a stationary object (601),
the said calculating means (702) (701) comprising:
- means for calculating the number of times that an object (601) is detected as being stationary during the said specified time period T6; the said time period T6 being chosen to be longer than the duration of the phenomena associated with the object (601) being detected; the said time period T6 being shorter than the said time period T5,
- discriminating means for discriminating, at a point of the said zone (603), between a stationary object (601) that is present a number of times larger than a specified threshold S6 and an object (601) that is present a number of times smaller than the said specified threshold S6, the said object (601) being referred to hereinafter as the new stationary object (601).

29. A system according to claim 28, intended more particularly to determine whether a new stationary object (601) is situated:
- on the other side of the interface (602),
- on the same side of the interface (602),
- at the interface (602)
relative to one of the said observation points;
the video images being recorded from the said observation point (607) at specified time intervals;
the said system also comprising, when primitives are associated with each pixel:
- iterating means (703) for iterating, at successive time intervals Δt composing a specified time period T7, the process, specified in claim 27, of detecting the presence of a stationary object (601);
the said calculating means (702) (701) also comprising:
- means for calculating the number of times that an object (601) is detected as being stationary and new during the said specified time period T7; the said time period T7 being chosen to be longer than the duration of the phenomena being observed; the said time period T7 being shorter than the said time period T6,
**Case in which the object (601) is situated on the other side of the interface (602):**
- detecting means (708a) for detecting, at a point of the said zone (603), between an object (601) that is present a number of times larger than a specified threshold S7 and an object (601) that is present a number of times smaller than the said specified threshold S7 (the said object (601) being referred to hereinafter as the new stationary object (601) situated on the other side of the interface (602);
Case in which the object (601) is situated on the same side of the interface (602):
- detecting means (708b) for detecting, at a point of the said zone (603), between an object (601) that is present a number of times larger than a specified threshold S8 and an object (601) that is present a number of times smaller than the said specified threshold S8 (the said object (601) being referred to hereinafter as the new stationary object (601) situated on the same side of the interface (602)); the said threshold S8 being smaller than the threshold S7;
**Case in which the object (601) is situated at the interface (602):**
- detecting means (708c) for detecting, at a point of the said zone (603), an object (601) that is present a number of times between the threshold S7 and the threshold S8
the said objects (601) being referred to hereinafter as objects (601) situated at the interface (602).

30. A system according to claim 29; the said system also including emitting means (716) for emitting a warning signal (711) according to the detection criteria applied in one or the other of the cases specified in claim 33, especially in the presence of a stationary object (601) situated under the surface of a water/air interface (602).

31. A method according to any one of claims 1 to 15, intended more particularly for surveillance of a swimming pool.

32. A system according to any one of claims 16 to 30, intended more particularly for surveillance of a swimming pool.

33. The application of the method according to any one of claims 1 to 15 to surveillance of a swimming pool.

34. The application of the system according to any one of claims 18 to 30 to surveillance of a swimming pool.
